# EUROPÄISCHE PATENTSCHRIFT

(11) **EP 2 359 038 B1**
(45) Veröffentlichungstag und Bekanntmachung des Hinweises auf die Patenterteilung: **24.04.2019**
(21) Anmeldenummer: 09777364.2
(22) Anmeldetag: 22.07.2009
(51) Int. Cl.: F16K 1/44, B67D 7/78

(54) **VORRICHTUNG ZUR VERROHRUNG VON PROZESSANLAGEN DER NAHRUNGSMITTEL- UND GETRÄNKEINDUSTRIE**
DEVICE FOR THE PIPING OF PROCESS SYSTEMS IN THE FOOD AND BEVERAGE INDUSTRY
SYSTÈME DE TUYAUTERIE POUR DES INSTALLATIONS DE TRAITEMENT DES INDUSTRIES ALIMENTAIRES ET DES BOISSONS

(30) Priorität: 31.07.2008 DE 102008035940; 15.10.2008 DE 102008051819
(43) Veröffentlichungstag der Anmeldung: 24.08.2011
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE); DUERIG, Andreas, US-Visalia, CA 93277 (US); NANGPAL, Ashok, Ellicot Citi, MD 21042 (US); MEDLAR, David, West Friendship, MD 21794 (US)
(74) Vertreter: Hauck Patentanwaltspartnerschaft mbB
(86) Internationale Anmeldenummer: PCT/EP2009/005320
(87) Internationale Veröffentlichungsnummer: WO 2010/012409

(56) Entgegenhaltungen:
- WO-A-93/16307
- WO-A-98/54494
- DE-A1-102005 051 467
- DE-C1- 10 108 259

## Beschreibung

### TECHNISCHES GEBIET

Die Erfindung betrifft eine Vorrichtung zur Verrohrung von Prozessanlagen der Nahrungsmittel- und Getränkeindustrie nach dem Oberbegriff des Anspruchs 1 oder des nebengeordneten Anspruchs 2, wobei diese Verrohrungssysteme insbesondere dort Anwendung finden, wo die der Produktbearbeitung und dem Produkttransfer dienenden Prozessanlagen hohen mikrobiologischen Qualitätsanforderungen und Forderungen nach bester Reinigungsfähigkeit im Durchfluss (sog. CIP-Fähigkeit) unterliegen. Die Anwendung schließt auch Bereiche insbesondere der Molkereitechnik, der Pharmazie und der Biotechnologie ein.

### STAND DER TECHNIK

Der gattungsbildende Prototyp eines solchen Verrohrungssystems ist zum Beispiel aus der DE 101 08 259 C1 bekannt, wobei dieses allerdings auf eine Verrohrungsanordnung beschränkt ist, bei der ein sogenannter Ventilverteilerbaum einem Tank eines Tanklagersystems zugeordnet ist, unmittelbar aus dessen unterem Tankboden ausmündet und einen von unten nach oben aufsteigenden, im Regelfall einen senkrechten Verlauf aufweist. Dabei sind die Prozessleitungen und Funktionsventile direkt unter dem jeweiligen Tankauslauf angebracht. Dieses Verrohrungssystem hat sich zwischenzeitlich in der Praxis bewährt; es ist in der Firmendruckschrift **GEA Tuchenhagen Brewery Systems, ECO-Matrix®, 223d-10/06,** unter der Bezeichnung ECO-Matrix® und insbesondere unter dem Aspekt der Wirtschaftlichkeit und des Einflusses auf die Produktqualität näher beschrieben.

Bei dem vorgenannten Verrohrungssystem können die Funktionsventile seitlich am Tankauslaufbaum, dem sog. Ventilverteilerbaum, oder senkrecht am Bodenflansch des Tanks befestigt werden. Diese Verrohrungstechnik minimiert deutlich die Entstehung von Kontamination und deren spätere Verteilung im Prozesssystem. Das vom Tank getrennt aufgebaute Rohrleitungssystem ermöglicht eine vollständige Produktentleerung und eine vom Tank unabhängige Reinigung.

Der Ventilverteilerbaum ist als langgestreckter Hohlkörper ausgebildet, er ist im Wesentlichen senkrecht orientiert und er besitzt Anschlussöffnungen zum Verbinden seines Innenraumes mit Rohrleitungen eines Rohrsystems, die seitlich an dem Ventilverteilerbaum vorbeigeführt sind. In jeder Verbindung zwischen der Rohrleitung und der zugeordneten Anschlussöffnung ist ein in seinem Sitzbereich vermischungssicher ausgestaltetes Ventil angeordnet, das diese Verbindung in unmittelbarer Nähe zum Hohlkörper schaltet. Als vermischungssicheres Ventil kann dabei jeweils ein sog. Doppelsitzventil mit zwei relativ zueinander bewegbaren Schließgliedern oder ein sog. Doppeldichtventil mit zwei auf einem einzigen Schließglied in Hubrichtung beabstandeten Sitzdichtungen oder ein sog. leckagegesichertes Scheibenventil zur Anwendung kommen. Zwischen den axial beabstandeten Abdichtungsstellen des vermischungssicheren Ventils befindet sich ein Leckagehohlraum, der über wenigstens einen Verbindungsweg mit der Umgebung des vermischungssicheren Ventils verbunden ist.

Als bevorzugtes vermischungssicheres Ventil findet in den in Rede stehenden Verrohrungssystemen bislang das vorg. Doppelsitzventil Verwendung, wobei letzteres konzentrisch ineinander angeordnete Ventilstangen für die Schließglieder aufweist, die einseitig durch das Ventilgehäuse hindurch- und aus diesem zu einem Antrieb herausgeführt sind. Ein Doppelsitzventil mit einer diesbezüglichen Schließglied- und Ventilstangenkonfiguration ist bereits aus der US 4 436 106 A bekannt. Der zwischen den beiden Schließgliedern angeordnete Leckagehohlraum wird dabei über einen Leckageablauf zwischen der Ventilstange des unabhängig angetriebenen ersten Schließgliedes und einer die Ventilstange umgebenden Hohlstange des abhängig angetriebenen zweiten Schließgliedes drainiert. Das zweite Schließglied ist dabei als Sitzteller in Form einer konischen Schließhülse ausgebildet, die an ihrem dem ersten Schließglied zugewandten Ende eine axiale Sitzdichtung trägt, die mit einem Ventilsitz am Ventilgehäuse zusammenwirkt. Das erste Schließglied ist gleichfalls als Sitzteller ausgebildet, der mit einer mit einem konischen Ventilsitz zusammenwirkt.

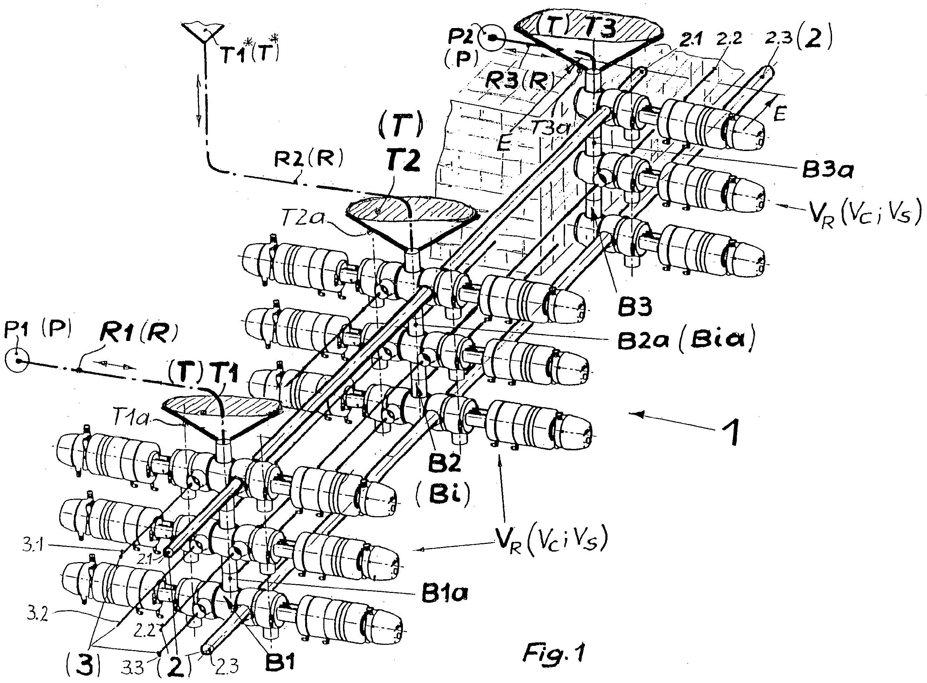

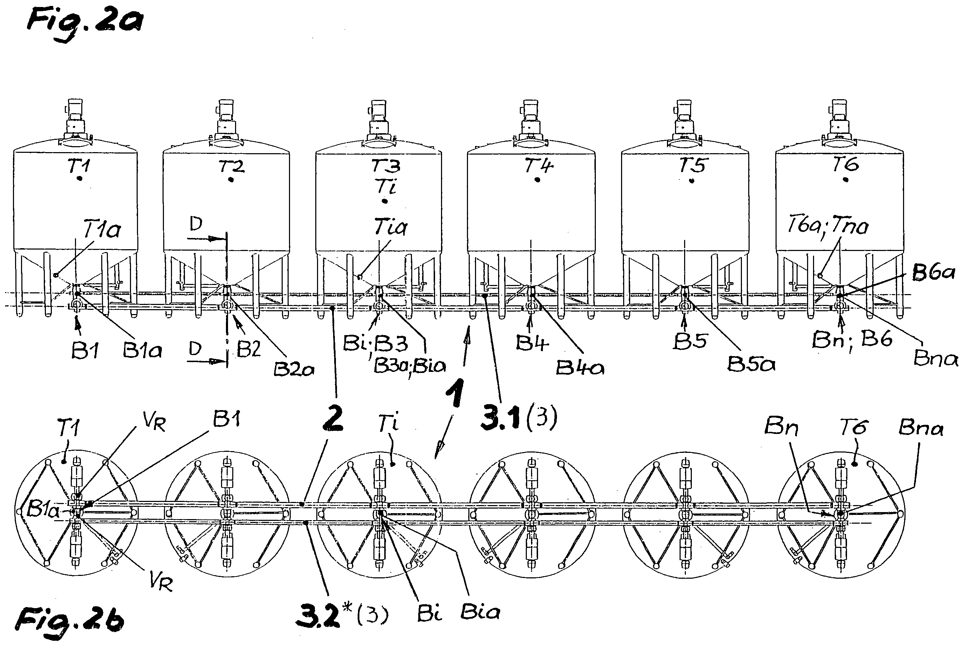

In der EP 0 625 250 B1 ist ein dem Doppelsitzventil gemäß der US 4 436 106 A gattungsgleiches Doppelsitzventil beschrieben, bei dem das erste Schließglied mit einem radialen Dichtungsmittel und das zweite Schließglied mit dem bekannten axialen Dichtungsmittel ausgebildet sind. Dabei findet das radiale Dichtungsmittel in der Schließstellung des Ventils in einer zylindrischen Sitzfläche dichtend Aufnahme und das dem ersten Schließglied zugewandte Ende des als Hohlstange ausgebildeten zweiten Schließgliedes trägt die auf eine Sitzfläche am Ventilgehäuse wirkende axiale Sitzdichtung. In der EP 0 625 250 B1 wird mit Blick auf die gattungsgemäßen Doppelsitzventile gemäß US 4 436 106 A darauf hingewiesen (s. Spalte 2, Zeile 56 bis Spalte 3, Zeile 16), dass derartige Doppelsitzventile, ausgehend von der Anordnungslage in den Figuren 1 und 2 der US 4 436 106 A, grundsätzlich in jeder beliebigen Einbaulage angeordnet werden können, also beispielsweise auch um 180 Grad gedreht, das heißt mit senkrecht nach unten orientierten Ventilstangen oder aber in waagerechter oder schrägliegender Anordnung. Bei abwärts gerichteten Ventilstangen, wobei diese Formulierung auch die Lage der Ventilstangen bei schrägliegender Anordnung einschließt, kann die Leckageflüssigkeit unter dem Einfluss der Schwerkraft eigenständig frei abfließen (über den Ringspalt zwischen der Ventilstange und der Hohlstange, **Figur 2**).

Aus der Druckschrift WO 98/54494 A1 ist ein Doppelsitzventil für die Nahrungsmittelindustrie bekannt, bei dem das hohlstangenförmige zweite Schließglied an seinem dem als Schieberkolben ausgebildeten, unabhängig betätigbaren ersten Schließglied zugewandten Endabschnitt außenseits eine axial/radial wirkende zweite Sitzdichtung und innenseits eine zylindrische Aufnahmebohrung aufweist. Der die Aufnahmebohrung aufnehmende Endabschnitt erstreckt sich ein Stück weit über die zweite Sitzdichtung hinaus und die Aufnahmebohrung ist durchmessergleich mit einer zylindrischen ersten Sitzfläche ausgebildet, die mit einer radial wirkenden ersten Sitzdichtung des ersten Schließgliedes zusammenwirkt. Durch die axiale Beabstandung der zweiten Sitzdichtung von der stirnseitigen Begrenzungsfläche des Endabschnittes des zweiten Schließgliedes sind die Sitzdichtungen und damit die zugeordneten Sitzflächen nicht unmittelbar aneinandergrenzend, sondern durch einen relativ langen, gewinkelten Spalt miteinander verbunden. In der Schließstellung des zweiten Schließgliedes gehen die Aufnahmebohrung und die erste Sitzfläche bündig ineinander über.

Eine in der DE 10 2005 051 467 A1beschriebene gattungsbildende Rohrverzweigungsanordnung geht von einem Vorrichtungssystem gemäß DE 101 08 259 C1 aus und ordnet in diesem System an den Anschlüssen des Hohlkörpers jeweils ein vermischungssicheres Ventil an, bei dem das erste Schließglied unabhängig angetrieben ist und bei seiner Öffnungsbewegung am als Sitzteller ausgebildeten zweiten Schließglied dichtend zur Anlage kommt und dieses gleichfalls in die Offenstellung überführt. Das zweite Schließglied weist an seinem dem ersten Schließglied zugewandten Ende eine zweite Sitzdichtung auf, die mit einer an eine zylindrische erste Sitzfläche angrenzenden zweiten Sitzfläche zusammenwirkt. Das als Schieberkolben ausgebildete erste Schließglied besitzt eine radial wirkende erste Sitzdichtung, die in der Schließstellung des Ventils in der ersten Sitzfläche dichtend Aufnahme findet. Die Ventilstangen für die Schließglieder sind konzentrisch ineinander angeordnet und einseitig durch das Ventilgehäuse hindurch- und aus diesem herausgeführt.

Dabei ist das Ventil der DE 10 2005 051 467 A1, in gleicher Weise wie es die EP 0 625 250 B1 mit Blick auf die US 4 436 106 A unter dem Gesichtspunkt der generell möglichen Einbaulage offenbart, in schrägliegender Anordnung am Hohlkörper angeordnet und es besitzt, zusätzlich zum radialen Dichtungsmittel am ersten Schließglied und dem axialen Dichtungsmittel am zweiten Schließglied, eine sog. Mitteldichtung, die in der Offenstellung des Doppelsitzventils zwischen den beiden Schließgliedern wirksam und am zweiten Schließglied angeordnet ist. Durch die schrägliegende Anordnung wird erreicht, dass der Leckagehohlraum des Ventils eine sich von einem anschlussseitigen Eintritt bis zu einer vom Eintritt beabstandeten austrittsseitigen Leckageaustrittsöffnung erstreckende Umfangswand aufweist, die schwerkraftseitig zur Leckageaustrittsöffnung hin ein Gefälle aufweist. Zweck dieser Maßnahme ist eine selbsttätige Entleerung des Leckagehohlraums von sich dort ansammelnder Leckageflüssigkeit.

Die bekannte Rohrverzweigungsanordnung nach der DE 10 2005 051 467 A1 ist, ebenso wie die Vorrichtung nach der DE 101 08 259 C1, auf eine Anordnung beschränkt, bei der der Hohlkörper (Ventilverteilerbaum) einem Tank eines Tanklagersystems zugeordnet ist und unmittelbar aus dessen Tankboden ausmündet. Die Selbstentleerung des Leckagehohlraumes ist ausschließlich dann gegeben (DE 10 2005 051 467 A1), wenn das Doppelsitzventil in der notwendigen schrägliegenden Anordnung am Hohlkörper angeordnet ist, d.h. wenn die Umfangswand des Leckagehohlraumes ein hinreichendes Gefälle besitzt. Dies erfordert unter Berücksichtigung der Ausbildung des zweiten Schließgliedes in Form einer konischen Schließhülse einen erheblichen Neigungswinkel der Längsachse des Doppelsitzventils gegenüber der Horizontalen. Die schrägliegende Anbindung der Doppelsitzventile am Hohlkörper erfordert an letzterem zwangsläufig jeweils radial orientierte, umlaufende Ausbuchtungen, die Totzonen für die Strömung in Längsrichtung des Hohlkörpers bilden. Dadurch kommt es bei Durchströmung des Hohlkörpers zum Abreißen der Strömung an diesen Stellen und zur Wirbelbildung. Diese Ausbuchtungen sind im Durchfluss schlecht reinigbar.

Darüber hinaus ist die sog. Mitteldichtung ein grundsätzlicher Nachteil, da diese das Ventil aufwendiger und störanfälliger macht und im Zuge der Öffnungs- und Schließbewegung, insbesondere in der sog. Abholstellung des zweiten Schließgliedes durch das erste Schließglied, aufgrund der Kavernenbildung zwischen den drei Dichtungen das angestrebte möglichst leckagefreie Schalten des Doppelsitzventils verschlechtert. Weiterhin ist bei dem bekannten Doppelsitzventil die bei der jeweiligen Sitzreinigung des einen Schließgliedes entstehende Sitzreinigungsströmung auf den Dichtungsbereich des anderen in seiner Schließstellung befindlichen, in der Regel produktbeaufschlagten Schließgliedes gerichtet. Diese Direktbeaufschlagung des Sitzbereichs aus der jeweiligen Sitzreinigungsströmung ist unerwünscht, da sie zu einer Umwandlung von kinetischer Strömungsenergie in statischen Druck führt, wodurch bei defekten Sitzdichtungen Leckageströmungen des Reinigungsmittels in das produktbeaufschlagte Ventilgehäuse generiert werden.

So wird beispielsweise in den USA gefordert, dass bei größeren Dichtungsdefekten oder gar dem Verlust einer der beiden Sitzdichtungen im Zuge der Sitzreinigung des jeweils anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird. Hierbei handelt es sich um die sog. PMO-Fähigkeit, die bedeutet, dass das vermischungssichere Doppelsitzventil ohne reinigungsbedingte Unterbrechungen an 365 Tagen im Jahr in Betrieb ist und dabei jeweils einseitig sitzreinigungsfähig ist, während die jeweils andere Seite produktbeaufschlagt und damit geschlossen bleibt.

In traditionellen Verrohrungssystemen der eingangs beschriebenen Art, die Ausgangspunkt für die sog. ECO-Matrix®-Verrohrungen waren, und in letzteren selbst kommen überwiegend hochentwickelte, leckagegesicherte Ventile, das vorstehend beschriebene Doppelsitzventil oder sog. Doppeldichtventile, zur Anwendung, die auch, wie vorstehend erwähnt, als vermischungssicher ausgestaltete Ventile bezeichnet werden. Bei einem Doppeldichtventil handelt es sich um ein Ventil mit einem einzigen Schließglied, das zwei axial beabstandete Abdichtungsstellen besitzt, zwischen denen der vorstehend beschriebene Leckageraum angeordnet ist. Diese beiden leckagegesicherten Hubventile vereinigen in sich alle erforderlichen Eigenschaften, die heute in ihrer Gesamtheit von einem Prozessventil auf dem in Rede stehenden Anwendungsgebiet gefordert werden können, wobei erforderlichenfalls auch die sog. Sitzreinigung mit umfasst ist. Diese Hubventile sind aber konstruktiv entsprechend aufwendig und damit kostenintensiv.

Die DE 101 08 259 C1 nennt als geeignete vermischungssichere Ventile darüber hinaus auch sog. Scheibenventile mit zwei am dichtenden Umfang des scheibenförmigen Schließgliedes beabstandeten Dichtungen, zwischen denen ein ringförmig umlaufender Leckagehohlraum angeordnet ist, der über wenigstens einen Verbindungsweg mit der Umgebung des Scheibenventils verbunden ist. Weitergehende Angaben, wie das bekannte Verrohrungssystem in Verbindung mit leckagegesicherten Scheibenventilen konkret auszugestalten ist, finden sich in der DE 101 08 259 C1 nicht.

Die vorliegende Erfindung (Anspruch 1) erweitert das vermischungssichere Ventil in Form eines Scheibenventils dahingehend, dass auch Scheibenventile mit zwei separaten, axial beabstandeten scheibenförmigen Schließgliedern zur Anwendung kommen sollen, wobei diese beiden Schließglieder zeitgleich oder zeitverzögert gemeinsam betätigt werden, jedes Schließglied mit dem zugeordneten Gehäuseabschnitt eine Abdichtungsstelle bildet und zwischen den beiden axial beabstandeten Abdichtungsstellen ein Leckagehohlraum vorgesehen ist, der über wenigstens einen schaltbaren Verbindungsweg mit der Umgebung des Ventils verbunden ist (z.B. DE 28 47 038 C3**;** DE 29 48 534 C2**;** DE 30 42 895 C2).

Aufgabe der Erfindung ist es, eine Vorrichtung zur Verrohrung der jeweils gattungsgemäßen Art zu schaffen, die bei hoher Betriebssicherheit höchsten Anforderungen an die Qualität des in ihm behandelten fluiden Produktes gerecht wird, die insgesamt, einschließlich der vermischungssicheren Ventile, einfach und kostengünstig aufgebaut ist und die bei allen in der Praxis vorkommenden Anordnungsvarianten des Ventilverteilerbaums in Bezug zum zugeordneten Prozessaggregat oder Tank der Prozessanlage im jeweiligen Ventilverteilerbaum weitestgehend die gleichen technologischen Bedingungen und Zustandsgrößen wie im Prozessaggregat oder Tank abbildet.

### ZUSAMMENFASSUNG DER ERFINDUNG

Die Aufgabe wird durch eine Vorrichtung zur Verrohrung mit den Merkmalen des Anspruchs 1 (gattungsbildende Vorrichtung gemäß DE 101 08 259 C1; erste Lösung) oder des nebengeordneten Anspruchs 2 (gattungsbildende Vorrichtung gemäß DE 10 2005 051 467 A1; zweite Lösung) gelöst. Vorteilhafte Ausgestaltungen der vorgeschlagenen Vorrichtung gemäß der Erfindung sind Gegenstand der jeweiligen Unteransprüche.

Ein Grundgedanke der Erfindung besteht bei der grundsätzlichen ersten oder zweiten Lösung darin, dass der Ventilverteilerbaum mit dem gesamten Innenraum des hohlen Gebildes Teil einer über den Tank oder das Prozessaggregat geführten Umlaufleitung ist. Diese Umlaufleitung ist mit einem ersten Umlaufleitungsabschnitt, der das hohle Gebilde als integralen Bestandteil umfasst, an den Tank oder das Prozessaggregat angeschlossen, und die Umlaufleitung ist über einen dritten Umlaufleitungsabschnitt, in dem eine Fördereinrichtung angeordnet ist, in den Tank oder das Prozessaggregat zurückgeführt. Durch den zwangsweisen Transport der Flüssigkeit über die Umlaufleitung aus dem Innenraum des hohlen Gebildes heraus in den Tank oder das Prozessaggregat und wieder zurück zum Ausgangspunkt im Innenraum des hohlen Gebildes wird die Gleichheit der technologischen Bedingungen und Zustandsgrößen im Ventilverteilerbaum und im Tank oder Prozessaggregat weitestgehend erreicht. Dabei ist die Umwälzung mittels Umlaufleitung ein zu einer Durchmischung mittels Rühreinrichtung alternatives oder sich ergänzendes Behandlungsmittel mit den sich daraus ergebenden verfahrenstechnischen Behandlungsmaßnahmen am in Frage kommenden Substrat.

Zusätzlich zur vorg. Lösung ist der Ventilverteilerbaum mit einem Wärmeträgermedium rekuperativ beaufschlagbar. Dadurch werden im jeweiligen Ventilverteilerbaum weitestgehend die gleichen technologischen Bedingungen und Zustandsgrößen wie im Prozessaggregat oder Tank abgebildet. Diesbezüglich sieht eine Ausführungsform der Vorrichtung vor, dass der Ventilverteilerbaum in Gänze oder in Teilbereichen doppelwandig ausgebildet ist, und dass der einen Wärmeaustauscher bildende Zwischenraum oder die einen Wärmetauscher bildenden Zwischenräume jeweils mit einem Zulauf- und einem Ablaufanschluss für das Wärmeträgermedium verbunden ist (sind). Hier kommt vorrangig eine Kühlung in Betracht, da beispielsweise bestimmte Betriebsvorschriften in USA für die in Rede stehenden Prozessanlagen eine Temperaturbegrenzung nach oben vorsehen (beispielweise Temperatur ϑ ≤ 7 °C in Molkereianlagen der USA). Grundsätzlich kann mit den erfindungsgemäßen Vorkehrungen auch eine Erwärmung des Produktes im Ventilverteilerbaum durchgeführt werden.

Dieser Vorteil wird unabhängig davon erreicht, ob der jeweilige Ventilverteilerbaum unmittelbar im unteren Tankboden eines jeweils zugeordneten Tanks der Prozessanlage ausmündet (erste Anordnungsvariante) oder/und ob der jeweilige Ventilverteilerbaum über eine zugeordnete Rohrverbindung mit einem zugeordneten Prozessaggregat oder Tank der Prozessanlage verbunden ist und die Rohrverbindung in das tank- oder prozessaggregatseitige Ende des Ventilverteilerbaumes einmündet (zweite Anordnungsvariante). Dabei ist in jeder dieser beiden Anordnungsvarianten, wie dies weiterhin vorgesehen ist, entweder ein von unten nach oben aufsteigender, im Regelfall ein senkrechter Verlauf des Ventilverteilerbaumes gegeben (erste Richtungsvariante) oder der Ventilverteilerbaum verläuft quer, im Regelfall waagerecht (zweite Richtungsvariante). Erste oder zweite Anordnungsvariante in Verbindung mit der ersten oder zweiten Richtungsvariante bilden einen weiteren Grundgedanken der Erfindung.

In allen diesen Fällen (erste und zweite Lösung in Verbindung mit der ersten oder zweiten Anordnungsvariante und diese wiederum in der ersten oder zweiten Richtungsvariante) durchströmen die aus dem Rohrsystem zu- oder abzuführenden fluiden Produkte das vom Ventilverteilerbaum begrenzte hohle Gebilde auf dem Weg über Anschlussöffnungen, wobei das jeweilige Fluid in diesem hohlen Gebilde in unmittelbarer Nähe zu dessen Begrenzung von den an dieses Gebilde herangeführten Rohrleitungen des Rohrsystems durch ein leckagegesichertes Ventil wahlweise, schaltbar und vermischungssicher abtrennbar ist.

Die zweite Lösung in Verbindung mit der ersten oder zweiten Anordnungsvariante, bei der allein ein als Doppelsitzventil ausgebildetes vermischungssicheres Ventil zur Verwendung kommt, zeichnet sich unter anderem dadurch aus, dass die Anschlussöffnung die zylindrische erste Sitzfläche des Doppelsitzventils ausbildet.

Eine vorteilhafte Ausführungsform sieht vor, dass bei der ersten Richtungsvariante, bei der der Ventilverteilerbaum einen von unten nach oben aufsteigenden, im Regelfall einen senkrechten Verlauf aufweist, die erste und die zweite Gruppe Rohrleitungen in jeweils reihenförmiger Anordnung untereinander, auf einander gegenüberliegenden Seiten des hohlen Gebildes, in zueinander und zur Längsachse des hohlen Gebildes parallelen Ebenen angeordnet sind. Eine derartige Verrohrung ist äußerst kompakt, raumsparend und übersichtlich.

Ein anderer Vorschlag sieht vor, dass bei der zweiten Richtungsvariante, bei der der Ventilverteilerbaum quer, im Regelfall waagerecht verläuft, die erste und die zweite Gruppe Rohrleitungen jeweils in zueinander parallelen Ebenen nebeneinander angeordnet und auf einer Seite oder auf gegenüberliegenden Seiten des hohlen Gebildes und in sich mit der Längsachse des hohlen Gebildes kreuzenden Ebenen an diesem vorbeigeführt sind. Eine derartige Verrohrung kommt dann zur Anwendung, wenn die Bauhöhe unterhalb des Tanks oder des Prozessaggregats begrenzt und dadurch die Anordnung eines Ventilverteilerbaumes mit einem von unten nach oben aufsteigenden, im Regelfall mit einem senkrechten Verlauf, nicht möglich ist und wenn gleichzeitig die gesamte relevante Verrohrung unterhalb des Auslaufs des Tanks oder des Prozessaggregats anzuordnen ist.

Bei den beiden vorg. Richtungsvarianten des Ventilverteilerbaumes wird die Flüssigkeit im Innenraum des hohlen Gebildes durch Umwälzung und im Bedarfsfall zusätzlich mit einer Rühreinrichtung durchmischt.

Ist, wie dies auch vorgeschlagen wird, ein zweiter Umlaufleitungsabschnitt, der wenigstens das hohle Gebilde überbrückt, als Bypass-Leitung zum ersten Umlaufleitungsabschnitt ausgeführt und mit letzterem beiderseits zusammengeführt, dann lässt sich über diese Verrohrung entweder die Umwälzung der Flüssigkeit über den oder, bei weiteren hier nicht beschriebenen flankierenden Maßnahmen, deren Abfuhr aus dem Tank intensivieren.

Eine vorteilhafte Ausführungsform sieht vor, aufbauend auf dieser grundsätzlichen Lösung, dass das hohlstangenförmige zweite Schließglied an seinem die zweite Sitzdichtung aufnehmenden Endabschnitt innenseits eine zylindrische Aufnahmebohrung aufweist, die durchmessergleich mit der zylindrischen ersten Sitzfläche ausgebildet ist. Weiterhin ist erfindungsgemäß vorgesehen, dass in der Schließstellung des zweiten Schließgliedes die Aufnahmebohrung und die erste Sitzfläche bündig ineinander übergehen. Dadurch wird leckagefreies Schalten erreicht, ohne dass ein drittes Dichtungsmittel zwischen den beiden Schließgliedern erforderlich ist, wie dies bei der Rohrverzweigungsanordnung gemäß dem vorstehend beschriebenen Stand der Technik (DE 10 2005 051 467 A1) der Fall ist. Darüber hinaus wird durch diese Lösung eine Direktbeaufschlagung des Sitzbereichs des Doppelsitzventils bei der Sitzreinigung vermieden und der Leckagehohlraum ist selbst bei waagerechter Anordnung des Doppelsitzventils selbstentleerend ausgestaltet.

Damit ist es möglich, das wenigstens eine an dem hohlen Gebilde angeordnete vermischungssichere Doppelsitzventil nicht nur einer Reinigung seines Leckagehohlraums sowohl in der Schließ- als auch in der Offenstellung zu unterziehen, sondern auch einer Sitzreinigung der einen Abdichtungsstelle, wenn die jeweils andere Abdichtungsstelle in der Schließstellung verbleibt. Beim Doppeldichtventil sind sinngemäß zumindest eine Reinigung des Leckagehohlraumes in der Schließstellung und eine Sitzreinigung der beiden Abdichtungsstellen gegeben. Die vorgeschlagene Vorrichtung erlaubt sämtliche heute üblichen Ventilreinigungen im Sitzbereich des vermischungssicheren Hubventils, wie sie auch bei herkömmlichen Ventilblöcken mit den vorgenannten Doppelsitzventilen möglich sind.

Um die Sicherheit gegen Direktbeaufschlagung des Sitzbereichs des zweiten Schließgliedes im Zuge der Sitzreinigung des ersten Schließgliedes noch weiter zu verbessern, ist weiterhin vorgesehen, dass das zweite Schließglied mit einer schließgliedseitigen Anschlagfläche über einen metallischen Anschlag an der zweiten Sitzfläche verfügt, wobei eine zugeordnete sitzflächenseitige Anschlagfläche unmittelbar an die erste Sitzfläche angrenzt. Mit dieser Maßnahme wird die vorstehend erwähnte PMO-Fähigkeit des Doppelsitzventils weiter verbessert.

Eine selbsttätige Entleerung des Leckagehohlraums ist sichergestellt oder besonders befördert, wenn, wie dies vorgesehen ist, bezogen auf die Anordnungslage, die Längsachse des Ventilgehäuses waagerecht oder, von der Anschlussöffnung aus gesehen, bis zu einem Winkel gegen die Waagerechte abfallend verläuft, und dass dabei eine innere Umfangswand des Leckagehohlraumes schwerkraftseitig zu dessen Austrittsöffnung hin ein Gefälle aufweist.

Um Produktverluste, beispielsweise beim Wechsel von der Produktfahrt zur Durchflussreinigung (CIP-Reinigung) der Rohrleitungen, zu minimieren, ist die in Frage kommende Rohrleitung molchbar ausgeführt. Hierzu wird vorgeschlagen, dass die betreffende Rohrleitung durchgängig mit einem unversperrten, Kreisform aufweisenden Durchtrittsquerschnitt ausgeführt und an einem jeweiligen Ventilgehäuse des vermischungssicheren Ventils oder dem jeweiligen Ventilgehäuse des Doppelsitzventils vorbeigeführt und mit letzterem jeweils fluidgängig verbunden ist.

Einfache und übersichtliche Rohrleitungsführungen ergeben sich im Rahmen der Vorrichtung, wenn die Ventilverteilerbäume eine reihen- oder matrixförmige Anordnung aufweisen.

Es ist weiterhin vorgesehen, dass das hohle Gebilde jeweils aus einer Aggregation von einzelnen Gebildeabschnitten zusammengesetzt ist, die in Richtung der Längsachse des hohlen Gebildes fluiddurchgängig miteinander verbunden sind und jeweils mindestens eine Anschlussöffnung aufweisen. Bei diesen Gehäuseteilen kann es sich entweder um diskrete, separate Teile handeln, die zu dem hohlen Gebilde in seiner Gesamtheit gefügt werden, oder um ein einstückiges Ganzes, bei dem die einzelnen Gehäuseteile stoffschlüssig miteinander verbunden sind.

Die Gebildeabschnitte können in Form von Gehäuseteilen ggf. unterschiedlich groß ausgebildet sein, so dass an diesen Gehäuseteilen wenigstens eine Anschlussöffnung ausgeführt werden kann, die einen von der Größe des jeweils zugeordneten Gehäuseteils abhängigen Durchtrittsquerschnitt aufweist. Anschlussöffnungen mit unterschiedlich großen Durchtrittsquerschnitten an einem Gehäuseteil können gleichfalls vorgesehen sein. Durch diese Gestaltungsvielfalt lässt sich das hohle Gebilde in allen seinen durchströmten Bereichen an die strömungstechnischen Erfordernisse der angeschlossenen Rohrleitungen unterschiedlicher Nennweite anpassen.

Um die technologischen Bedingungen und Zustandsgrößen im Ventilverteilerbaum weitestgehend adäquat zu jenen im Prozessaggregat oder dem Tank der Prozessanlage abzubilden, wird weiterhin vorgeschlagen, dass in den Ventilverteilerbaum in dessen Längsachse eine Rührerwelle eingreift, die wenigstens einen Rührer der Rühreinrichtung trägt. Damit gelangt beim Schalten der vermischungssicheren Ventile Produkt weitestgehend im originären Zustand, wie es im Prozessaggregat oder dem Tank vorliegt, ohne zeitliche Verzögerung aus dem Ventilverteilerbaum in die geschaltete Rohrleitung. Die Rührerwelle ist dabei, bezogen auf die Anordnungslage des Ventilverteilerbaumes, entweder über einen ersten Antrieb von oben oder einen zweiten Antrieb von unten angetrieben.

Die Vorkehrungen zur Realisierung eines rekuperativen Wärmeaustauschs im Bereich des Ventilverteilerbaumes gestalten sich sehr einfach, wenn sich der jeweilige Teilbereich der doppelwandigen Ausführung auf den oder die jeweiligen Abschnitt(e) des Ventilverteilerbaumes zwischen den Anschlussöffnungen beschränkt. Diese Abschnitte sind in der Regel zylindrisch ausgeführt, so dass dort die doppelwandige Ausführung besonders einfach gelingt.

Wird der wenigstens eine Rührer im vom Teilbereich des Wärmeaustauschers umgrenzten Abschnitt des Ventilverteilerbaumes angeordnet, dann befördert diese Anordnung die Wärmeübergangszahl in diesem Bereich, wodurch der Wärmeaustausch intensiviert wird.

Mit den durch die Ansprüche definierten erfindungsgemäßen Vorrichtungen lässt sich ein Verfahren zum Betrieb dieser Vorrichtungen durchführen, bei dem Flüssigkeiten aus dem Rohrsystem einem Tank oder einem Prozessaggregat zugeführt werden, bei dem Flüssigkeiten aus dem Tank oder dem Prozessaggregat in das Rohrsystem abgeführt werden, bei dem die zu- oder abzuführenden Flüssigkeiten einen mit dem jeweiligen Inhalt des Tanks oder des Prozessaggregats in Verbindung stehenden Raum durchströmen, und bei dem die Flüssigkeit in dem Raum über den Inhalt des Tanks oder des Prozessaggregats im Umlauf zwangsweise umgewälzt und dabei durchmischt wird. Zusätzlich kann die Flüssigkeit thermisch behandelt oder/und an Ort und Stelle durchmischt werden. Die Vorteile eines diesbezüglichen Verfahrens sind im Zusammenhang mit den Vorrichtungen und ihrer nachfolgend im Einzelnen dargestellten Ausführungsbeispiele beschrieben.

### KURZBESCHREIBUNG DER ZEICHNUNGEN

Ausführungsbeispiele der Vorrichtung zur Verrohrung von Prozessanlagen in einer ersten und einer zweiten Lösung, im Rahmen einer ersten und einer zweiten Anordnungsvariante sowie in einer ersten und einer zweiten Richtungsvariante gemäß der Erfindung sind in den Figuren der Zeichnung dargestellt und werden nachfolgend hinsichtlich Aufbau und Funktion beschrieben. Es zeigen
- **Figur 1**: in Form einer schematischen, teilweise vereinfacht dargestellten Perspektive einen Ausschnitt aus einer erfindungsgemäßen Vorrichtung zur Verrohrung von Prozessanlagen im Rahmen einer ersten und einer zweiten Lösung mit drei Ventilverteilerbäumen in reihenförmig fluchtender Anordnung, wobei an den hohlen Gebilden der beiden vorderen Ventilverteilerbäume jeweils beidseitig, einander gegenüberliegend, in zueinander und zur Längsachse des hohlen Gebildes parallelen Ebenen Rohrsysteme vorbeigeführt und angeschlossen sind und das dritte hohle Gebilde vor einer Wand angeordnet und einseitig an das zugeordnete Rohrsystem angeschlossen ist und wobei die Ventilverteilerbäume entweder unmittelbar im unteren Tankboden eines jeweils zugeordneten Tanks gemäß einer ersten Anordnungsvariante oder über eine zugeordnete Rohrverbindung mit einem zugeordneten Prozessaggregat oder Tank gemäß einer zweiten Anordnungsvariante verbunden sind;
- **Figur 2a**: in der Ansicht ein aus sechs Tanks bestehendes Tanklagersystem, das mit einer erfindungsgemäßen Vorrichtung gemäß der zweiten Lösung und der ersten Anordnungsvariante verrohrt ist;
- **Figur 2b**: das verrohrte Tanklagersystem gemäß **Figur 2a** in einer Ansicht von unten;
- **Figur 3**: einen Mittelschnitt durch einen Ventilverteilerbaum am zweiten Tank des Tanklagersystems gemäß **Figur 2a** entsprechend einem dort mit **D-D** gekennzeichneten Schnittverlauf, wobei entsprechende Mittelschnitte der anderen Ventilverteilerbäume im vorliegenden Ausführungsbeispiel bei gleichliegenden Bauteilen zu gleichen Darstellungen führen;
- **Figur 4**: in perspektivischer Darstellung den Ventilverteilerbaum gemäß **Figur 3** mit den beidseitig angeschlossenen, vermischungssicheren Doppelsitzventilen;
- **Figur 5**: in Ansicht den Ventilverteilerbaum gemäß **Figur 3** in einer dort mit "**Z**" gekennzeichneten Blickrichtung, wobei das obere Doppelsitzventil entsprechend einem in **Figur 3** mit **A-A** gekennzeichneten Schnittverlauf und die molchbare Rohrleitung am unteren Ende des Ventilverteilerbaumes entsprechend einem in **Figur 3** mit **B-B** gekennzeichneten Schnittverlauf jeweils geschnitten sind;
- **Figur 6**: einen Mittelschnitt durch den hinteren Ventilverteilerbaum gemäß **Figur 1** entsprechend einem dort mit **E-E** gekennzeichneten Schnittverlauf, wobei entsprechende Mittelschnitte durch weitere, nicht dargestellte Ventilverteilerbäume gleicher Ausführung bei gleichliegenden Bauteilen zu gleichen Darstellungen führen und wobei es sich hierbei um eine erfindungsgemäße Vorrichtung gemäß der zweiten Lösung und der zweiten Anordnungsvariante mit einseitig am Ventilverteilerbaum angeschlossenen, vermischungssicheren Doppelsitzventilen handelt;
- **Figur 7**: in perspektivischer Darstellung die Vorrichtung gemäß **Figur 6****;**
- **Figur 8**: einen Schnitt durch den Ventilverteilerbaum gemäß **Figur 6** entsprechend einem dort mit **C-C** gekennzeichneten Schnittverlauf;

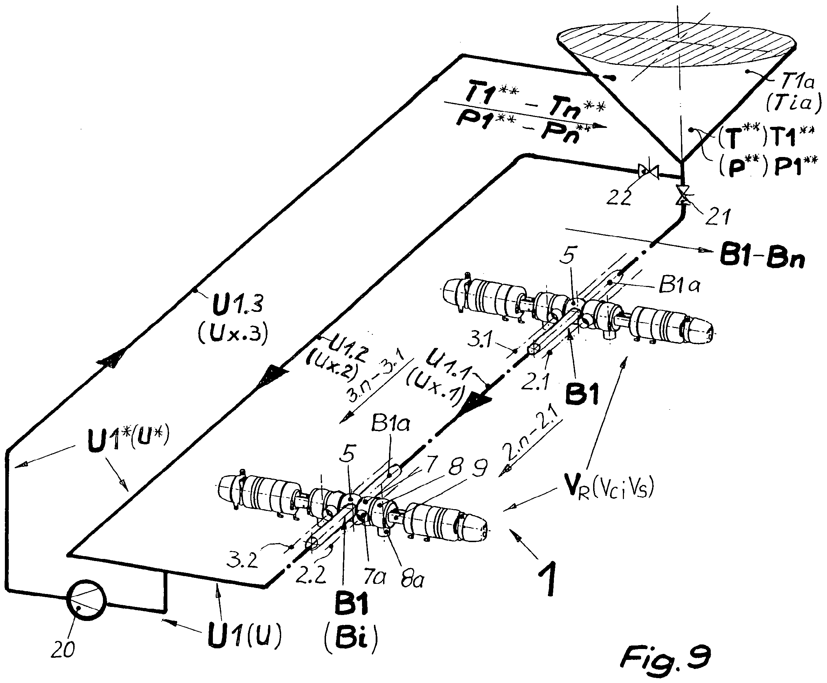

- **Figur 9**: in Form einer schematischen, teilweise vereinfacht dargestellten Perspektive eine erfindungsgemäße Vorrichtung zur Verrohrung von Prozessanlagen im Rahmen einer ersten und einer zweiten Lösung mit einem Ventilverteilerbaum in waagerechter Anordnung (zweite Richtungsvariante der ersten Anordnungsvariante), wobei eine erste Gruppe Rohrleitungen und eine zweite Gruppe Rohrleitungen auf einander gegenüberliegenden Seiten des hohlen Gebilde an die zugeordneten Anschlussöffnungen herangeführt, jeweils in zueinander parallelen Ebenen nebeneinander angeordnet (nicht dargestellt) und auf einer Seite oder auf gegenüberliegenden Seiten des hohlen Gebildes und in sich mit dessen Längsachse kreuzenden Ebenen an diesem vorbeigeführt sind, und wobei u.a. die Umlaufleitung mit einem ersten Umlaufleitungsabschnitt, der das hohle Gebilde als integralen Bestandteil umfasst, an den Tank oder das Prozessaggregat angeschlossen ist und
- **Figuren 10a** - **10c**: in Unteransicht, Ansicht und Draufsicht eine spezielle Ausführungsform eines Gebildeabschnitts des hohlen Gebildes mit beiderseits daran angeordneten, leckagegesicherten Doppelsitzventilen entsprechend einer Anordnung gemäß **Figur 9****.**
Während die Erfindung in den verschiedensten Ausbildungsformen realisierbar ist, werden in den Zeichnungen besonders bevorzugte Ausbildungsformen der beiden Lösungen, Anordnungs- und Richtungsvarianten gezeigt und nachfolgend beschrieben unter der Voraussetzung, dass diese nur Beispiele für die Erfindung darstellen, nicht aber die Erfindung auf die speziell dargestellten Beispiele beschränkt ist.

### DETAILLIERTE BESCHREIBUNG

Eine Vorrichtung 1 zur Verrohrung von Prozessanlagen bestehe beispielhaft aus drei Ventilverteilerbäumen B1, B2 und B3, im allgemeinsten Falle aus B1 bis Bn Ventilverteilerbäumen, die vorzugsweise reihenförmig und miteinander fluchtend nebeneinander angeordnet sind. Jeder Ventilverteilerbaum B1, B2, B3 (Bi) ist als langgestrecktes hohles Gebilde B1a, B2a, B3a (im allgemeinsten Falle B1a bis Bna; Bia), vorzugsweise in Form eines zylindrischen Rohres, ausgeführt, der einen von unten nach oben aufsteigenden, im Regelfall einen senkrechten Verlauf aufweist. Die dargestellte Vorrichtung 1 zeigt weiterhin ein erstes Rohrsystem 2, das aus einer ersten Gruppe Rohrleitungen 2.1, 2.2, 2.3 (im allgemeinsten Falle aus 2.1 bis 2.i bis 2.n Rohrleitungen) besteht, und ein zweites Rohrsystem 3, das aus einer zweiten Gruppe Rohrleitungen 3.1, 3.2, 3.3 (im allgemeinsten Falle aus 3.1 bis 3.i bis 3.n Rohrleitungen) besteht. Jeweils am unteren Ende des jeweiligen Ventilverteilerbaumes B1 bis B3 kann ein im vorliegenden Falle nicht dargestelltes drittes Rohrsystem 4 (beispielsweise für Reinigung) angeschlossen sein, wenn dieser Ort oder Zugang nicht für andere Mittel zur Verfügung stehen soll.

Die erste Gruppe Rohrleitungen 2.1, 2.2, 2.3 und die zweite Gruppe Rohrleitungen 3.1, 3.2, 3.3 sind jeweils in reihenförmiger Anordnung untereinander und, in Bezug auf die vorderen beiden Ventilverteilerbäume B1 und B2, auf einander gegenüberliegenden Seiten des hohlen Gebildes B1a, B2a, in zueinander und zur Längsachse des hohlen Gebildes parallelen Ebenen angeordnet und an diesem vorbeigeführt (beidseitige Anordnung eines vermischungssicheren Ventils V_{C} oder V_{R} oder V_{S}). Das dritte hohle Gebilde B3a befindet sich beispielsweise unmittelbar vor einer vertikalen Wand, so dass an diesem nur das erste Rohrsystem 2 vorbeigeführt werden und Anschluss finden soll (einseitige Anordnung eines vermischungssicheren Ventils V_{C} oder V_{R} oder V_{S}).

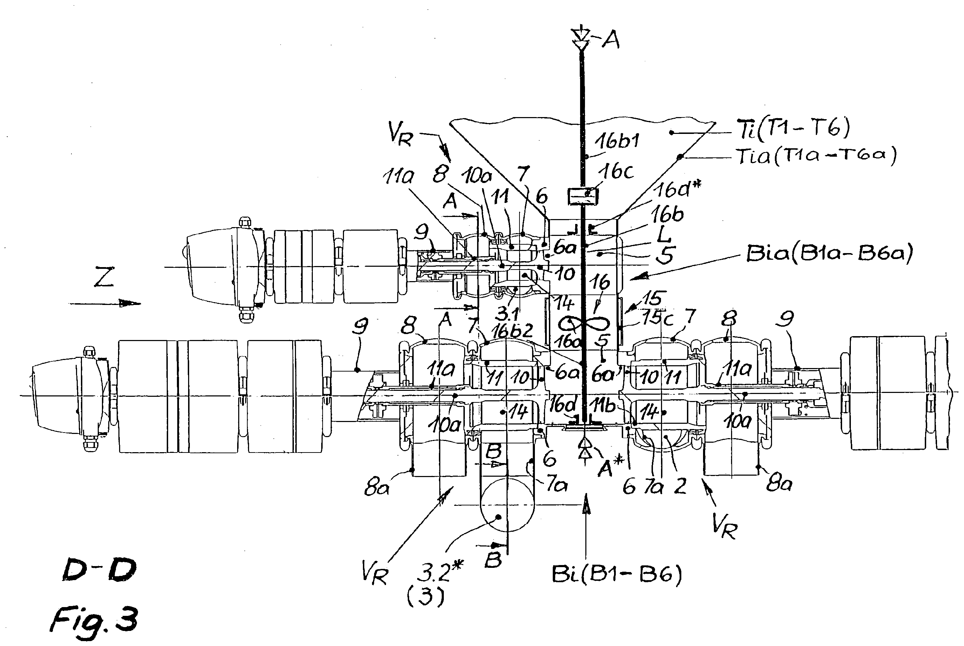

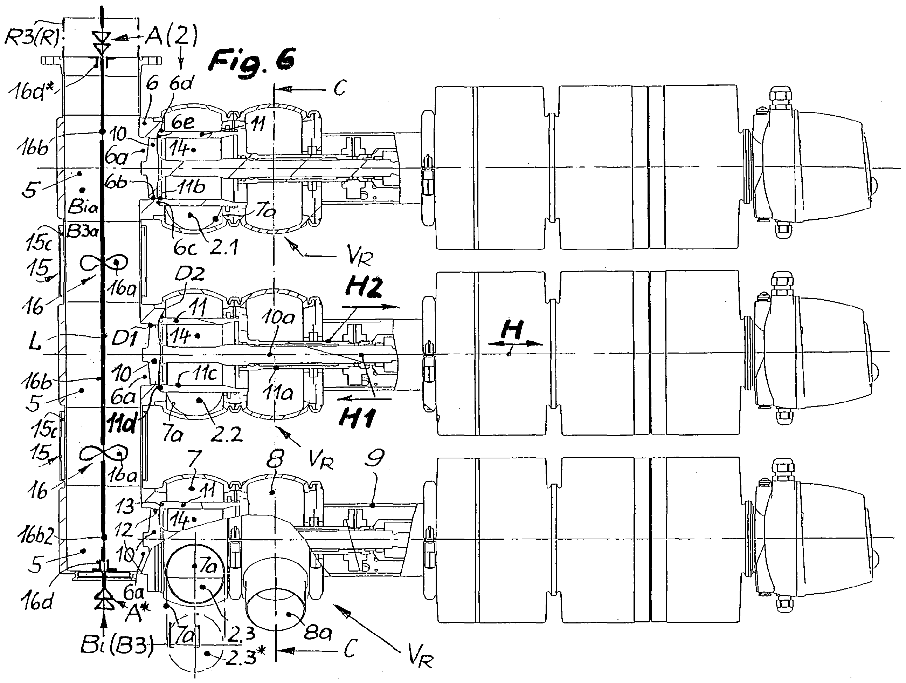

Einen Mittelschnitt durch eine dem Ventilverteilerbaum B3 im Wesentlichen entsprechende Anordnung zeigt **Figur 6****.** Das hohle Gebilde B1a, B2a, B3a besitzt Anschlussöffnungen 6a (s. Ausführungsbeispiel gemäß den **Figuren 3** und **6**) zum Verbinden seines Innenraumes mit jeder der Rohrleitungen 2.1, 2.2, ..., 2.i, ..., 2.n und 3.1, 3.2, ..., 3.i, ..., 3.n und ggf. 4. In jeder dieser vorgenannten Verbindungen ist das vermischungssicher ausgestaltete Ventil V_{C} oder V_{R} oder V_{S} angeordnet, das diese Verbindung in unmittelbarer Nähe zum hohlen Gebilde B1a, B2a, B3a schaltet. Bei der in **Figur 1** dargestellten Vorrichtung finden Doppelsitzventile V_{R} Verwendung; gleichfalls geeignete Doppeldichtventile V_{C} unterscheiden sich von letzteren, von außen gesehen, im Wesentlichen nicht. Bei der Verwendung von leckagegesicherten Scheibenventilen V_{S} ergibt sich hinsichtlich des Antriebs und des Leckage- und Ablaufgehäuses für die Schaltleckage und das Reinigungsmittel aus der Reinigung des Leckagehohlraumes ein anderes, nicht dargestelltes Erscheinungsbild, da der jeweilige Antrieb senkrecht zur Symmetrieachse der zugeordneten Anschlussöffnung 6a angeordnet ist und die Schaltleckage und das Reinigungsmittel in der Regel unmittelbar aus dem Leckage- und Ablaufgehäuse in die Umgebung abgeführt werden. Führung und Verlauf der Rohrsysteme 2 und 3 und ggf. 4 sind im Wesentlichen unabhängig von der Art der verwendeten vermischungssicheren Ventile V_{C}, V_{R}, oder V_{S}.

Wie dies in **Figur 1** angedeutet ist, mündet der jeweilige Ventilverteilerbaum B1 bis B3 (im allgemeinsten Falle B1 bis Bi bis Bn) entweder unmittelbar im unteren Tankboden T1a bis T3a (im allgemeinsten Falle T1a bis Tia bis Tna) eines jeweils zugeordneten Tanks T1 bis T3 (Tank T; im allgemeinsten Falle T1 bis Ti bis Tn) der Prozessanlage aus (erste Anordnungsvariante) oder er ist über eine zugeordnete Rohrverbindung R (R1 bis R3; im allgemeinsten Falle R1 bis Ri bis Rn) mit einem zugeordneten Prozessaggregat P (P1, P2; im allgemeinsten Falle P1 bis Pi bis Pn) oder Tank T1* (Tank T*; im allgemeinsten Falle T1* bis Ti* bis Tn*) der Prozessanlage verbunden und die Rohrverbindung R (R1 bis R3 (im allgemeinsten Falle R1 bis Ri bis Rn) mündet in das obere Ende des Ventilverteilerbaumes B1bis B3 (B1 bis Bi bis Bn) ein (zweite Anordnungsvariante). Die beiden vorgenannten grundsätzlichen Anordnungsvarianten können auch in einer einzigen Vorrichtung 1 auftreten (Mischform).

Bei der zweiten Anordnungsvariante ist das obere Ende des ersten Ventilverteilerbaumes B1 über eine erste Rohrverbindung R1 beispielhaft mit einem ersten Prozessaggregat P1 verbunden, der zweite Ventilverteilerbaum B2 ist über eine zweite Rohrverbindung R2 mit einem ersten Tank T1* und der dritte Ventilverteilerbaum B3 ist über eine dritte Rohrverbindung R3 mit einem zweiten Prozessaggregat P2 verbunden. Die Rohrverbindungen R1, R2 und R3 sind im allgemeinsten Falle Rohrverbindungen R zugeordnet, die aus einer Anzahl i = 1 bis n Rohrverbindungen R1 bis Rn bestehen können.

Die Prozessaggregate P oder die Tanks T* können bei der zweiten Anordnungsvariante jede Anordnung und Positionierung einnehmen, während die Ventilverteilerbäume B1 bis Bn vorzugsweise reihen- oder matrixförmig angeordnet sind. Bei den dargestellten Rohrverbindung R1 bis R3 (R1 bis Rn) kann es sich im Bereich ihres an den Ventilverteilerbaum B1 bis B3 (B1 bis Bn) angeschlossenen Endabschnitts jeweils um einen senkrechten oder einen wie auch immer geneigten Endabschnitt handeln. Der geneigte Endabschnitt, der im Grenzfall waagerecht verläuft, findet mit einem entsprechenden Rohrbogen Anschluss an dem oberen Ende des jeweiligen Ventilverteilerbaumes B1 bis B3 (B1 bis Bn).

Die **Figuren 2a** und **2b** zeigen ein weiteres Ausführungsbeispiel der Vorrichtung 1 für die vorg. erste Anordnungsvariante, bei der in einem aus sechs Tanks T1 bis T6 (im allgemeinsten Falle T1 bis Ti bis Tn) bestehenden Tanklagersystem der jeweilige Ventilverteilerbaum B1 bis B6 (B1 bis Bi bis Bn) unmittelbar im unteren Tankboden T1a bis T6a (T1a bis Tia bis Tna) des jeweils zugeordneten Tanks T1 bis T6 ausmündet (**Figur 2a**). An dem hohlen Gebilde B1a bis B6a (B1a bis Bia bis Bna) sind jeweils beidseitig Doppelsitzventile V_{R} angeordnet (**Figur 2b**), die eine Rohrleitung 3.1 (z.B. für die Befüllung der Tanks) und eine molchbare Rohrleitung 3.2* (z.B. für die Entleerung der Tanks) eines zweiten Rohrsystems 3 und eine Rohrleitung 2 eines ersten Rohrsystems (z.B. Rücklaufleitung für die CIP-Reinigung der Tanks und der übrigen Vorrichtung) schalten.

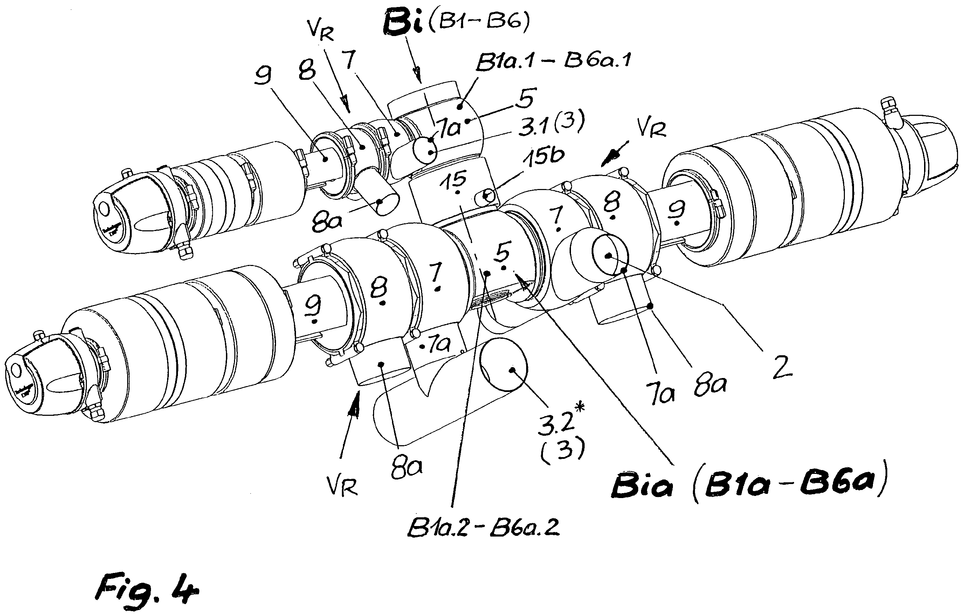

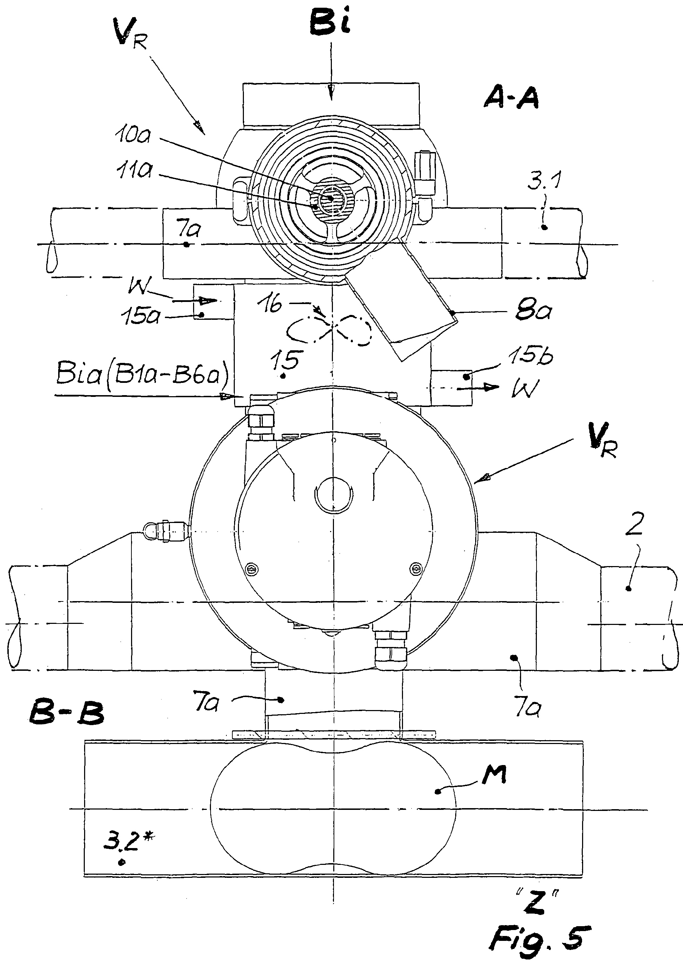

Die **Figuren 3** bis **5** zeigen, dass das hohle Gebilde B1a bis B6a (im allgemeinsten Falle Bia) im Rahmen der Vorrichtung 1 gemäß den **Figuren 2a, 2b** beispielhaft aus zwei Gebildeabschnitten 5 zusammengesetzt sein kann, wobei jeder Gebildeabschnitt 5 im Umfassungsbereich seiner Anschlussöffnungen 6a als Ringgehäuse 6 ausgebildet ist (**Figur 3**), das jeweils innenseits (s. hierzu wegen der besseren Erkennbarkeit **Figur 6****,** oberer Gebildeabschnitt 5) eine erste Sitzfläche 6b, eine zweite Sitzfläche 6c sowie eine zylindrische Ausnehmung 6d aufnimmt. An das Ringgehäuse 6 des unteren Gebildeabschnittes 5 schließt sich, jeweils quer zu dessen Längsrichtung (s. **Figuren 3****,** **4**), beiderseits ein Ventilgehäuse 7 eines Doppelsitzventils V_{R} an, an dessen Rohranschluss 7a (rechte Seite) die Rohrleitung 2 des ersten Rohrsystems herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet (**Figuren 4** und **5**).

Das am unteren Gebildeabschnitt 5 linksseitig angeordnete Ventilgehäuse 7 (**Figuren 3, 4, 5**) mündet über den senkrecht nach unten orientierten Rohranschluss 7a in die molchbare zweite Rohrleitung 3.2* aus der zweiten Gruppe Rohrleitungen des zweiten Rohrsystems 3 ein. Diese molchbare zweite Rohrleitung 3.2* ist durchgängig mit einem unversperrten, Kreisform aufweisenden Durchtrittsquerschnitt ausgeführt, wodurch sie für einen Molch M, beispielsweise einen dargestellten Doppelkugelmolch (**Figur 5**), durchgängig ist; sie ist an dem zugeordneten Ventilgehäuse 7 des vermischungssicheren Doppelsitzventils V_{R} vorbeigeführt und mit letzterem fluidgängig verbunden . Prinzipiell kann jede der Rohrleitungen 2.1 bis 2.n der ersten Gruppe Rohrleitungen des ersten Rohrsystems 2 und jede der Rohrleitungen 3.1 bis 3.n der zweiten Gruppe Rohrleitungen des zweiten Rohrsystems 3 und ggf. auch das dritte Rohrsystem 4 in der vorbeschriebenen Weise molchbar ausgeführt werden. Dies führt dann zu den molchbaren Rohrleitungen 2.1* bis 2.n* (2.3* siehe **Figur 6**), den molchbaren Rohrleitungen 3.1* bis 3.n* (3.2* siehe **Figur 3**) und ggf. einem molchbaren dritten Rohrsystem 4*.

Am oberen Gebildeabschnitt 5 (**Figuren** 3, **4**) ist nur linksseitig ein Ventilgehäuse 7 eines weiteren Doppelsitzventils V_{R} angeordnet, an dessen Rohranschluss 7a die erste Rohrleitung 3.1 aus der zweiten Gruppe Rohrleitungen des zweiten Rohrsystems 3 herangeführt ist. Im Ausführungsbeispiel ist vorgesehen, dass der Rohranschluss 7a am Ventilgehäuse 7, bezogen auf die Anordnungslage, mit seiner untersten inneren Mantellinie am tiefsten Punkt des Innenraumes des Ventilgehäuses 7 tangential einmündet (s. **Figuren 4****,** **5**).

Das jeweilige Ventilgehäuse 7 ist Teil des vermischungssicheren Doppelsitzventils V_{R}. An das Ventilgehäuse 7 schließt sich, in Längsrichtung des Doppelsichtventils V_{R} gesehen, seitlich ein Leckage- und Ablaufgehäuse 8 mit einem Ablaufanschluss 8a sowie ein nicht näher bezeichneter Antrieb an, wobei letzterer mit dem Leckage- und Ablaufgehäuse 8 über ein Laternengehäuse 9 verbunden ist.

Das Doppelsitzventil V_{R} ist mit zwei seriell angeordneten Schließgliedern 10, 11 ausgebildet (**Figuren 3****,** **6**), die in der Schließstellung des Ventils das Überströmen von Fluiden vom hohlen Gebilde Bia bzw. dem Gebildeabschnitt 5 in das Ventilgehäuse 7 verhindern. Die Schließglieder 10, 11 begrenzen sowohl in der Schließals auch in der Offenstellung einen Leckagehohlraum 14, der mindestens einen Verbindungsweg mit der Umgebung des Doppelsitzventils V_{R} aufweist. Im dargestellten Ausführungsbeispiel sind der Innenraum des Leckage- und Ablaufgehäuses 8 und sein Ablaufanschluss 8a Teil dieses Verbindungsweges. Das erste Schließglied 10 ist mit einer ersten Ventilstange 10a und das zweite Schließglied 11 ist mit einer zweiten Ventilstange 11a verbunden, die konzentrisch ineinander angeordnet sind und einseitig durch das Ventilgehäuse 7 hindurch- und aus diesem über das Leckage- und Ablaufgehäuse 8 zu einem Antrieb herausgeführt sind.

Der Gebildeabschnitt 5 mit den beidseitig vorgesehenen Ringgehäusen 6 oder jener mit einem einseitig angeordneten Ringgehäuse 6 ist jeweils einstückig ausgeführt und das Ventilgehäuse 7 umfasst jeweils das Ringgehäuse 6 außenseits und ist mit diesem stoffschlüssig, vorzugsweise durch Schweißung, verbunden. Die Anschlussöffnung 6a (s. insbesondere **Figur 6**, oberer Gebildeabschnitt 5) bildet mit ihrer Umfangsbegrenzung die zylindrische erste Sitzfläche 6b für das erste Schließglied 10 aus. Die Rohranschlüsse 7a sind, wie vorstehend bereits beschrieben, bis auf ihre Verbindung mit molchbaren Rohrleitungen 2.1* bis 2.n* und 3.1* bis 3.n* und ggf. 4* vorzugsweise tangential an das Ventilgehäuse 7 angeschlossen. Das Ventilgehäuse 7 besitzt an seinem dem Leckage- und Ablaufgehäuse 8 zugewandten Ende jeweils einen nicht bezeichneten Klemmflansch, über den es mit dem Leckage- und Ablaufgehäuse 8 über einen ebenfalls nicht bezeichneten sog. Spannring lösbar verbunden ist.

Die **Figuren 3** und **6** zeigen weitere Einzelheiten des vermischungssicheren Doppelsitzventils V_{R}. Ausgehend von den bereits vorstehend dargestellten Merkmalen den Ventils ist zu ergänzen, dass das erste Schließglied 10 unabhängig angetrieben ist und bei seiner Öffnungsbewegung am als Sitzteller ausgebildeten zweiten Schließglied 11 zur Anlage kommt und dieses gleichfalls in die Offenstellung überführt. Das zweite Schließglied 11 ist als Hohlstange ausgebildet, die an ihrem dem ersten Schließglied 10 zugewandten Ende eine axial wirkende zweite Sitzdichtung 13 aufweist (**Figur 6**, unterer Gebildeabschnitt 5), die mit der an die zylindrische erste Sitzfläche 6b angrenzenden zweiten Sitzfläche 6c zusammenwirkt. Das als Schieberkolben ausgebildete erste Schließglied 10 weist eine radial wirkende erste Sitzdichtung 12 auf, die in der Schließstellung des Ventils in der ersten Sitzfläche 6b dichtend Aufnahme findet. Dabei ist die zylindrische erste Sitzfläche 6b in der die Anschlussöffnung 6a begrenzenden Umfangswand ausgebildet.

Das hohlstangenförmige zweite Schließglied 11 weist an seinem die zweite Sitzdichtung 13 aufnehmenden Endabschnitt innenseits eine zylindrische Aufnahmebohrung 11b auf (**Figuren 6****,** **3**), die durchmessergleich mit der zylindrischen ersten Sitzfläche 6b ausgebildet ist. In der Schließstellung des zweiten Schließgliedes 11 gehen die Aufnahmebohrung 11b und die erste Sitzfläche 6b bündig ineinander über, so dass leckagefreies Schalten mit nur zwei Sitzdichtungen 12, 13 gegeben ist.

Das Doppelsitzventil V_{R} wird durch einen jeweiligen Teilhub H1, H2 seiner Schließglieder 10, 11 einer Sitzreinigung unterworfen (s. **Figur 6****,** mittleres Doppelsitzventil V_{R}). Die Sitzreinigung des ersten Schließgliedes 10 erfolgt durch den der Öffnungsbewegung mit einem Öffnungshub H gegensinnigen ersten Teilhub H1 und jene des zweiten Schließgliedes 11 durch den gleichsinnigen zweiten Teilhub H2, wobei das jeweils andere Schließglied 11, 10 in seiner Schließstellung verbleibt. In der jeweiligen Sitzreinigungsstellung wird am ersten Schließglied 10 ein leckageraumseitiger erster Drosselspalt D1 und am zweiten Schließglied 11 ein leckageraumabgewandter zweiter Drosselspalt D2 gebildet. Der erste Drosselspalt D1 wird dabei einerseits von dem äußeren Durchmesser des ersten Schließgliedes 10 (Schieberkolben) und andererseits von der zylindrischen ersten Sitzfläche 6b und der zweite Drosselspalt D2 wird einerseits von einer äußeren Mantelfläche des hohlstangenförmigen zweiten Schließgliedes 11 und andererseits von der zylindrischen Ausnehmung 6d im Ringgehäuse 6 begrenzt.

In der Schließstellung des zweiten Schließgliedes 11, die von diesem auch in der Sitzreinigungsstellung des ersten Schließgliedes 10 eingenommen wird, verfügt das zweite Schließglied 11 mit einer schließgliedseitigen Anschlagfläche 11d (s. **Figur 6****,** mittlerer Gebildeabschnitt 5) über einen metallischen Anschlag an der zweiten Sitzfläche 6c, wobei eine der schließgliedseitigen Anschlagfläche 11d zugeordnete sitzflächenseitige Anschlagfläche 6e unmittelbar an die erste Sitzfläche 6b angrenzt (**Figur 6**, oberer Gebildeabschnitt 5). Durch diese Anordnung wird der Sitzbereich des zweiten Schließgliedes 11 im Zuge der Sitzreinigung des ersten Schließgliedes 10 vor einer Direktbeaufschlagung mit der Sitzreinigungsströmung zusätzlich zu der ohnehin optimalen Anordnungsgeometrie der Sitzflächen zueinander sehr wirksam geschützt. Eine Direktbeaufschlagung des Sitzbereichs des ersten Schließgliedes 10 im Zuge der Sitzreinigung des zweiten Schließgliedes 11 ist ebenfalls ausgeschlossen, da die zugeordnete Sitzreinigungsströmung quer zur ersten Sitzfläche 6b und mit Abstand vom benachbarten Endabschnitt des ersten Schließgliedes 10 und seiner ersten Sitzdichtung 12 kollisionsfrei in den Leckagehohlraum 14 eintritt.

Das als Hohlstange ausgebildete zweite Schließglied 11 ist an seiner äußeren Mantelfläche zylindrisch ausgebildet, und es mündet in das Leckage- und Ablaufgehäuse 8 aus (**Figuren 3****,** **6**), das sich mit einem nicht bezeichneten Klemmflansch an der dem Ringgehäuse 6 abgewandten Seite des Ventilgehäuses 7 an letzteres anschließt. Die lösbare Verbindung übernimmt ein nicht bezeichneter Spannring. Die äußere Mantelfläche des zweiten Schließgliedes 11 ist im Verbindungsbereich zwischen dem Ventilgehäuse 7 und dem Leckage- und Ablaufgehäuse 8 geführt und abgedichtet. Auf die Beschreibung von Einzelheiten hierzu wird verzichtet.

Das zweite Schließglied 11 geht im Bereich des Innenraumes des Leckage- und Ablaufgehäuses 8 auf die im Durchmesser kleinere zweite Ventilstange 11a über und es ist eine fluiddurchlässige Verbindung zwischen dem zweiten Schließglied 11 und der zweiten Ventilstange 11a über wenigstens eine im Wesentlichen radial orientierte, nicht bezeichnete Traverse vorgesehen. Die Ventilstangen 10a, 11a sind an der dem Ventilgehäuse 7 abgewandten Seite des Leckage- und Ablaufgehäuses 8 durch letzteres hindurch- und aus diesem herausgeführt, wo sie das Laternengehäuse 9 axial durchsetzen und jeweils zu einem nicht bezeichneten Antrieb des Ventils geführt sind. Der Leckagehohlraum 14 ist über eine durch eine innere Umfangswand 11c des zweiten Schließgliedes 11 begrenzte Ablaufbohrung (**Figur 6**) mit dem Innenraum des Leckage- und Ablaufgehäuses 8 verbunden, der in den Ablaufanschluss 8a ausmündet. Das Leckage- und Ablaufgehäuse 8 ist laternengehäuseseitig durch einen nicht bezeichneten Deckelteil verschlossen, der von der zweiten Ventilstange 11a abgedichtet durchdrungen ist.

In den Ventilverteilerbaum B1 bis B6 (Bi) (**Figur 3**) oder Bi (B3) (**Figur 6**) greift in dessen Längsachse L eine Rührerwelle 16b ein, die wenigstens einen Rührer 16a einer Rühreinrichtung 16 trägt. Die Rührerwelle 16b ist grundsätzlich entweder über einen ersten Antrieb Rühreinrichtung A von oben oder einen zweiten Antrieb Rühreinrichtung A* von unten angetrieben. Dabei kann die Rührerwelle 16b an ihrem dem ersten Antrieb A oder dem zweiten Antrieb A* abgewandten Ende im zugeordneten Ende des Ventilverteilerbaumes B1 bis B6 oder Bi (B3) zusätzlich in einem unteren Lager 16d oder einem oberen Lager 16d* gelagert sein.

Im dargestellten ersten Ausführungsbeispiel (**Figur 3**) ist der erste Antrieb Rühreinrichtung A aus einer nicht dargestellten Rühreinrichtung im jeweiligen Tank T1 bis T6 (Ti) abgeleitet und die Rührerwelle 16b ist hierzu fluchtend über eine Kupplung 16c mit einer oberen Rührerwelle 16b1 verbunden, wobei letztere eine Verlängerung der Rührerwelle der Rühreinrichtung im Tank T1 bis T6 bildet. Die Rührerwelle 16b ist nach unten über den Rührer 16a hinaus in eine untere Rührerwelle 16b2 verlängert und letztere ist in dem unteren Lager 16d am unteren Ende des Ventilverteilerbaumes B1 bis B6 zusätzlich gelagert. Der wenigstens eine Rührer 16a ist vorzugsweise in einem Abschnitt des Ventilverteilerbaumes B1 bis B6 zwischen den Anschlussöffnungen 6a angeordnet.

Im dargestellten zweiten Ausführungsbeispiel (**Figur 6**), bei dem eine dritte Rohrleitung R3 (R) in den Ventilverteilerbaum Bi (B3) von üben her einmündet, ist die Rührerwelle 16b grundsätzlich entweder über den ersten Antrieb Rühreinrichtung A von oben oder in einfacherer Weise über den zweiten Antrieb Rühreinrichtung A* von unten angetrieben. Die Rührerwelle 16b trägt beispielsweise zwei Rührer 16a, von denen jeder vorzugsweise in einem Abschnitt des Ventilverteilerbaumes Bi (B3) zwischen den Anschlussöffnungen 6a angeordnet ist. Die Rührerwelle 16b ist an ihrem dem ersten Antrieb Rühreinrichtung A oder dem zweiten Antrieb Rühreinrichtung A* abgewandten Ende im zugeordneten Ende des Ventilverteilerbaumes Bi (B3) zusätzlich in dem unteren Lager 16d oder dem oberen Lager 16d* gelagert. Es gilt sinngemäß die diesbezügliche Beschreibung zu **Figur 3**.

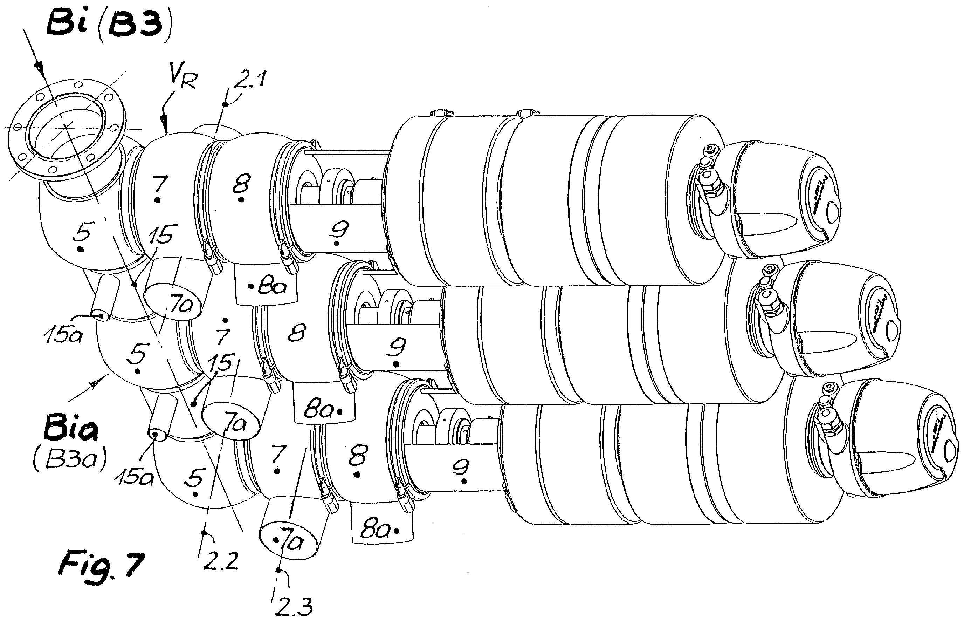

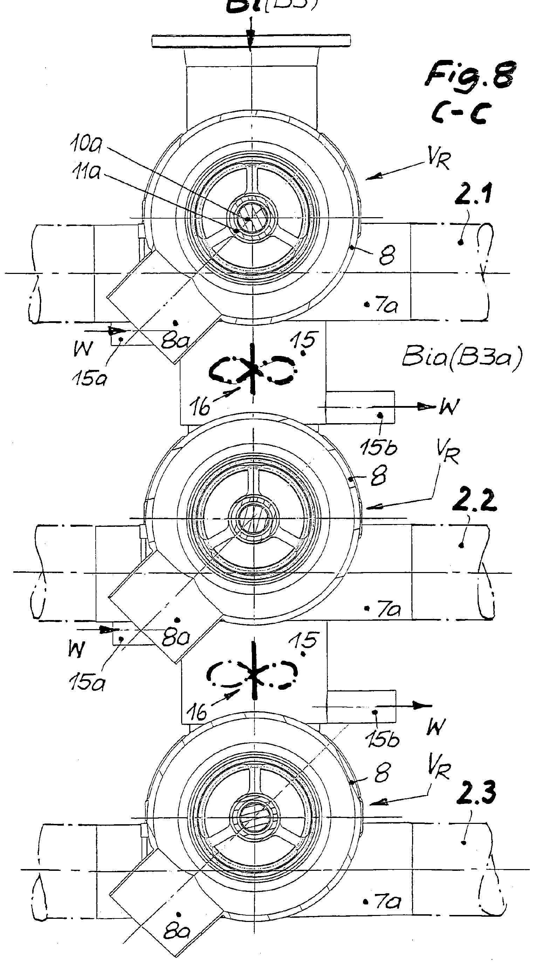

Die Ausgestaltung des Ventilverteilerbaumes Bi (B3) in Verbindung mit den vermischungssicheren Ventilen V_{C}, V_{R}, V_{S}, insbesondere mit dem Doppelsitzventil V_{R}, entsprechend der zweiten Anordnungsvariante im Rahmen der zweiten Lösung (**Figuren 6** bis **8**) ist adäquat zur vorstehend beschriebenen ersten Anordnungsvariante im Rahmen der zweiten Lösung (**Figuren 3** bis **5**). Auf eine neuerliche Beschreibung der gleichartigen Merkmale wird daher verzichtet. Die drei Doppelsitzventile V_{R} schalten die erste Gruppe Rohrleitungen 2.1, 2.2 und 2.3 des ersten Rohrsystems 2. Bei einer molchbaren Ausführung dieser Rohrleitungen ist die jeweilige Rohrleitung, wie dies am unteren Ventilgehäuse 7 durch die Rohrleitung 2.3* alternativ dargestellt ist (**Figur 6**), am jeweiligen Ventilgehäuse 7 vorbeigeführt, wobei ein nunmehr nicht mehr tangential aus dem Ventilgehäuse 7 ausmündender Rohranschluss [7a] für eine fluidgängige Verbindung zwischen Ventilgehäuse 7 und der molchbaren Rohrleitung 2.3* sorgt. Die Anordnung einer Rühreinrichtung 16 mit wenigstens einem Rührer 16a wurde vorstehend gleichfalls bereits beschrieben.

Sowohl bei der vorbeschriebenen ersten (**Figuren 1** bis **5**) als auch bei der zweiten Lösung (**Figuren 1** und **6** bis **8**) ist der jeweilige Ventilverteilerbaum Bi mit einem Wärmeträgermedium W rekuperativ beaufschlagbar. Hierzu ist der Ventilverteilerbaum Bi (**Figuren 1** bis **8**) in Gänze oder in Teilbereichen doppelwandig ausgebildet, wobei der einen Wärmeaustauscher 15 bildende Zwischenraum 15c oder die einen Wärmetauscher 15 bildenden Zwischenräume 15c jeweils mit einem Zulauf- und einem Ablaufanschluss 15a, 15b für das Wärmeträgermedium W verbunden ist (sind) (s. insbesondere **Figuren 4****,** **5** und **7****,** **8**).

Zur Vereinfachung der Vorrichtung 1 beschränkt sich der vorerwähnte jeweilige Teilbereich, wie dies durchgängig in den **Figuren 3** bis **8** dargestellt ist, auf den oder die jeweiligen Abschnitt(e) des Ventilverteilerbaumes Bi zwischen den Anschlussöffnungen 6a.

Wird der wenigstens eine Rührer 16a im vom Teilbereich des Wärmeaustauschers 15 umgrenzten Abschnitt des Ventilverteilerbaumes Bi angeordnet, wie dies in den **Figuren 3** und **6** gezeigt ist, dann befördert diese Anordnung die Wärmeübergangszahl in diesem Bereich, wodurch der Wärmeaustausch intensiviert wird.

Die dargestellte horizontale Anordnung des Doppelsitzventils V_{R}, die auch auf die beiden anderen vermischungssicheren Doppelsitzventile V_{C}, oder V_{S} übertragbar ist, stellt eine bevorzugte Anordnung dar, die deshalb möglich ist, weil durch die vorstehend beschriebene Ausgestaltung des Ventils selbst in dieser Lage eine Selbstentleerung des Leckagehohlraumes 14 ohne Pfützenbildung möglich ist. Im allgemeinsten Falle ist eine schwerkraftseitig abfallende Anordnung der Doppelsitzventile V_{R} am jeweiligen hohlen Gebilde Bia vorgesehen, wobei, bezogen auf die Anordnungslage, die Längsachse des Ventilgehäuses 7 waagerecht oder, von der Anschlussöffnung 6a aus gesehen, bis zu einem Winkel gegen die Waagerechte abfallend verläuft, und wobei dabei die innere Umfangswand 11c des Leckagehohlraumes 14 schwerkraftseitig zu dessen Austrittsöffnung hin ein Gefälle aufweist.

Das hohle Gebilde B1a bis Bna kann jeweils auch aus einer Aggregation von einer Anzahl einzelner Gebildeabschnitten 5 zusammengesetzt sein (s. hierzu **Figuren 3** bis **8**), die in Richtung der Längsachse L des Ventilverteilerbaumes B1 bis Bn fluiddurchgängig miteinander verbunden sind und jeweils mindestens eine Anschlussöffnung 6a aufweisen. Die Gebildeabschnitte 5 können in Form von Gehäuseteilen B1a.1 und B1a.2 bis B6a.1 und B6a.2 (im allgemeinsten Falle Bia.1 bis Bia.m mit einer Anzahl 1 bis m Gehäuseteile; **Figur 4**) unterschiedlich groß ausgebildet sein, wobei dann beispielsweise die jeweilige Anschlussöffnung 6a einen von der Größe des jeweils zugeordneten Gebildeabschnitts 5 abhängigen Durchtrittsquerschnitt aufweisen kann. Bei mehr als einer Anschlussöffnung 6a am jeweiligen Gebildeabschnitt 5 werden im Bedarfsfall auch unterschiedlich große Durchtrittsquerschnitte der Anschlussöffnungen 6a ausgeführt.

Unterhalb eines Tanks T1** (allgemein T**), von dem nur der untere Tankboden T1a (allgemein Tia) dargestellt ist, oder eines Prozessaggregats P1** (allgemein P**) (**Figur 9**), bei dem dort nur eine geringe Bautiefe gegeben ist, verläuft der Ventilverteilerbaum B1 (allgemein Bi) quer, im vorliegenden Falle waagerecht, und er ist über einen zugeordneten ersten Umlaufleitungsabschnitt U1.1 (allgemein Ux.1) mit dem unteren Tankboden Tia des Tank T** oder dem Prozessaggregat P** verbunden. Dabei mündet der erste Umlaufleitungsabschnitt Ux.1 in das tank- oder prozessaggregatseitige Ende des Ventilverteilerbaumes B1 (Bi) ein. Am hohlen Gebilde B1a (Bia) des Ventilverteilerbaumes B1 (Bi) ist maximal eine Anzahl n Gebildeabschnitte 5 angeordnet, von denen lediglich zwei dargestellt sind. Beiderseits des jeweiligen Gebildeabschnitts 5 schließen sich in der vorstehend beschriebenen Weise die leckagesicherten Ventile V_{R}, V_{C}, oder auch V_{S} an, wobei im Ausführungsbeispiel leckagegesicherte Doppelsitzventile V_{R} zur Anwendung kommen. Diese bestehen jeweils aus dem Ventilgehäuse 7 mit einem Rohranschluss oder zwei Rohranschlüssen 7a, dem Leckage- und Ablaufgehäuse 8 mit dem Ablaufanschluss 8a sowie dem Laternengehäuse 9 und dem sich anschließenden Antrieb.

Das Tanklager kann aus einer Anzahl n Tanks T1** bis Tn** oder die Aggregation der Prozessaggregate kann aus einer Anzahl n Prozessaggregate P1** bis Pn** bestehen, die, wie im Ausführungsbeispiel, vorzugsweise reihenförmig oder andernfalls auch matrixförmig angeordnet sind. Entscheidend ist, dass aufgrund der geringen Bautiefe unterhalb der Tanks T** oder der Prozessaggregate P** der jeweilige dem Tank T** oder dem Prozessaggregat P** zugeordnete Ventilverteilerbaum Bi (B1 bis Bn) quer, im Regelfall waagerecht, verläuft.

Eine erste Gruppe Rohrleitungen 2.1 bis 2.n und eine zweite Gruppe Rohrleitungen 3.1 bis 3.n, die das Rohrsystem 2, 3 bilden, sind jeweils in zueinander parallelen Ebenen nebeneinander angeordnet (nicht dargestellt) und im Regelfall auf einer Seite oder auch auf gegenüberliegenden Seiten des hohlen Gebildes B1a (Bia) und in sich mit der Längsachse des hohlen Gebildes B1a (Bia) kreuzenden Ebenen an diesem vorbeigeführt. Im Ausführungsbeispiel sind nur die Ursprünge der Rohleitungen 2.1, 2.2 und 3.1, 3.2, ausgehend von dem jeweils zugeordneten Ventilgehäuse 7 mit seinen Rohranschlüssen 7a, dargestellt.

Der erste Umlaufleitungsabschnitt Ux.1 (U1.1 bis Un.1; allgemein Ui.1), der jeweils das hohle Gebilde Bia (B1a bis Bna) als integralen Bestandteil umfasst, ist Teil einer über den Tank T** oder das Prozessaggregat P** geführten Umlaufleitung U (U1 bis Un; allgemein Ui), wobei diese über einen dritten Umlaufleitungsabschnitt Ux.3 (U1.3 bis Un.3, allgemein Ui.3), in dem jeweils eine Fördereinrichtung 20, vorzugsweise eine Kreiselpumpe, angeordnet ist, in den Tank T** oder das Prozessaggregat P** zurückgeführt ist. Im Bedarfsfall ist ein zweiter Umlaufleitungsabschnitt Ux.2 (U1.2 bis Un.2, allgemein Ui.2), der wenigstens das hohle Gebilde Bia (B1a bis Bna) überbrückt, als Bypass-Leitung zum ersten Umlaufleitungsabschnitt Ux.1 (U1.1 bis Un.1) ausgeführt und mit letzterem beiderseits zusammengeführt. Der zweite und der dritte Umlaufleitungsabschnitt Ux.2, Ux.3 bilden jeweils eine zur Umlaufleitung U (U1 bis Un) parallele Umlaufleitung U* (U1* bis Un*; allgemein Ui*). Der erste Umlaufleitungsabschnitt Ux.1 ist tank- oder prozessaggregatseitig mittels eines ersten Absperrventils 21 und der zweite Umlaufleitungsabschnitt Ux.2 ist in gleicher Weise mittels eines zweiten Absperrventils 22 absperrbar.

Die Anordnung der Umlaufleitung U (U1 bis Un) sowie der parallelen Umlaufleitung U* (U1* bis Un*) ist nicht auf einen Tank T** oder ein Prozessaggregat P** beschränkt, die an einen im Wesentlichen waagerechten Ventilverteilerbaum Bi angeschlossen sind. Vielmehr ist dieses Verrohrungsprinzip sinngemäß auf beide vorbeschriebenen Lösungen, Anordnungs- und Richtungsvarianten in ihrer Anwendung auf Tanks T, T* und Prozessaggregate P übertragbar, bei denen der Ventilverteilerbaum im Wesentlichen senkrecht verläuft und dort unmittelbar oder über eine Rohrleitung angeschlossen ist. Mit Hilfe der Umlaufleitungen U, U* wird eine Gleichheit der technologischen Bedingungen und Zustandsgrößen im hohlen Gebilde Bia und im Tank T, T*, T** oder Prozessaggregat P, P** erreicht, d.h. es wird beispielsweise durch Umpumpen eine Erwärmung der Flüssigkeit (Produkt) im Rohrleitungssystem verhindert, falls dieses dort bei einer Temperatur unterhalb der Raumtemperatur ansteht. Andernfalls bleibt die gleichfalls erfindungsgemäß vorgeschlagene thermische Behandlung der Flüssigkeit (Produkt) im Bereich des Ventilverteilerbaumes Bi durch rekuperative Beaufschlagung mit einem Wärmeträgermedium W eine weitere Option.

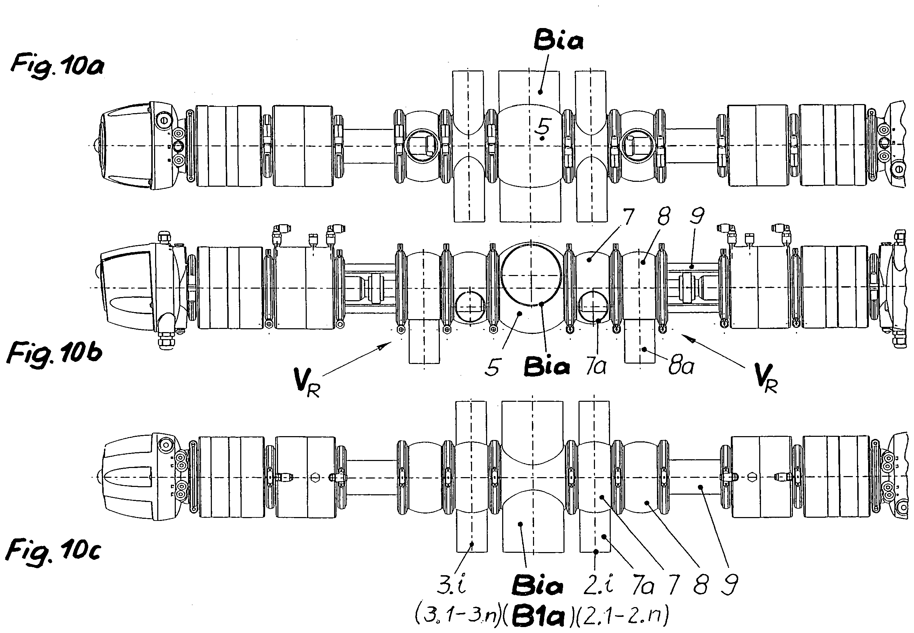

Eine vorteilhafte Ausführungsform des Gebildeabschnitts 5, aus dem sich das hohle Gebilde B1a (Bia) des Ventilverteilerbaumes B1 (Bi) zusammensetzt, mit beiderseits angeordneten und miteinander fluchtenden leckagesicherten Doppelsitzventilen V_{R}, wie er vorzugsweise im waagerecht angeordneten Ventilverteilerbaum B1 (Bi) gemäß **Figur 9** zur Anwendung kommt, zeigen die **Figuren 10a** bis **10c****.** Um Sumpfbildung zu vermeiden und somit eine vollständige Restentleerung zu erreichen, ist der Rohranschluss 7a tangential im unteren Bereich des Ventilgehäuses 7 angeordnet. Das hohle Gebilde B1a (Bia), das in jedem Falle in Form eines Kreisquerschnitt aufweisenden Rohrleitungsabschnittes integraler Teil des ersten Umlaufleitungsabschnittes U1.1 (Ui.1) ist, mündet derart in den oberen Bereich des Gebildeabschnitts 5 ein, dass bei Vermeidung eines sumpfbildenden Raumes im Gebildeabschnitt 5 unterhalb des hohlen Gebildes B1a (Bia) ein restloser Abfluss der Flüssigkeit aus letzterem in die beiderseits angeschlossenen Ventilgehäuse 8 sichergestellt ist.

Aus dem oben Genannten wird verständlich, dass verschiedene Modifikationen und Varianten der Vorrichtung zur Verrohrung von Prozessanlagen der Nahrungsmittel- und Getränkeindustrie realisiert werden können, ohne vom Geist und dem neuen Konzept der vorliegenden Erfindung abzuweichen. Dies ist so zu verstehen, dass keine Beschränkung auf die speziellen Ausführungsformen beabsichtigt ist, welche hier illustriert worden sind. Die Offenbarung soll alle solche Abwandlungen umfassen, die sich innerhalb des von den Ansprüchen beanspruchten Schutzbereichs befinden.

### BEZUGSZEICHENLISTE

### Figuren 1 bis 8

- 1: Vorrichtung (zur Verrohrung von Prozessanlagen)
- 2: erstes Rohrsystem
- 2.1, 2.2, ..., 2.n: erste Gruppe Rohrleitungen
- 2.i: eine der Rohrleitungen aus der ersten Gruppe
- 2.1: erste Rohrleitung aus der ersten Gruppe
- 2.2: zweite Rohrleitung aus der ersten Gruppe
- 2.1* - 2.3* - 2.n*: molchbare Rohrleitungen aus der ersten Gruppe

- 3: zweites Rohrsystem (z.B. Entleeren)
- 3.1, 3.2, ..., 3.n: zweite Gruppe Rohrleitungen
- 3.i: eine der Rohrleitungen aus der zweiten Gruppe
- 3.1: erste Rohrleitung aus der zweiten Gruppe
- 3.2: zweite Rohrleitung aus der zweiten Gruppe
- 3.1* - 3.2* - 3.n*: molchbare Rohrleitungen aus der zweiten Gruppe

- (4): drittes Rohrsystem (z.B. Reinigung)
- (4*): molchbare Rohrleitungen des dritten Rohrsystems
- 5: Gebildeabschnitt

- 6: Ringgehäuse
- 6a: Anschlussöffnung
- 6b: erste Sitzfläche
- 6c: zweite Sitzfläche
- 6d: zylindrische Ausnehmung
- 6e: sitzflächenseitige Anschlagfläche

- 7: Ventilgehäuse
- 7a: Rohranschluss

- 8: Leckage- und Ablaufgehäuse
- 8a: Ablaufanschluss
- 9: Laternengehäuse

- 10: erstes Schließglied (Schieberkolben)
- 10a: erste Ventilstange

- 11: zweites Schließglied (Sitzteller)
- 11a: zweite Ventilstange (Hohlstange)
- 11b: zylindrische Aufnahmebohrung
- 11c: innere Umfangswand
- 11d: schließgliedseitige Anschlagfläche (radial innenseitig)

- 12: erste Sitzdichtung
- 13: zweite Sitzdichtung
- 14: Leckagehohlraum

- 15: Wärmeaustauscher
- 15a: Zulaufanschluss
- 15b: Ablaufanschluss
- 15c: Zwischenraum

- 16: Rühreinrichtung
- 16a: Rührer
- 16b: Rührerwelle
- 16b1: obere Rührerwelle
- 16b2: untere Rührerwelle
- 16c: Kupplung
- 16d: unteres Lager
- 16d*: oberes Lager

- A: erster Antrieb Rühreinrichtung
- A*: zweiter Antrieb Rühreinrichtung
- B1 bis Bn: Ventilverteilerbaum
- Bi: einer der Ventilverteilerbäume B1 bis Bn
- B1a bis Bna: hohles Gebilde
- Bia: der Rohrleitung Ri zugeordnetes hohles Gebilde B1a bis Bna
- Bia.1 bis Bia.m: Gehäuseteile 1 bis m des hohlen Gebildes Bia

- D1: erster Drosselspalt
- D2: zweiter Drosselspalt

- H: Öffnungshub
- H1: erster Teilhub
- H2: zweiter Teilhub

- L: Längsachse des Ventilverteilerbaumes

- M: Molch (Doppelkugelmolch)

- P: Prozessaggregat (allgemein)
- P1: erstes Prozessaggregat
- P2: zweites Prozessaggregat
- P3: drittes Prozessaggregat
- Pi: i-tes Prozessaggregat
- Pn: n-tes Prozessaggregat

- R: Rohrverbindungen (allgemein); die an das obere Ende des jeweiligen Ventilverteilerbaumes B1 bis Bn herangeführt ist
- R1: erste Rohrverbindung
- R2: zweite Rohrverbindung
- R3: dritte Rohrverbindung
- Ri: Ventilverteilerbaum Bi zugeordnete Rohrverbindung
- Rn: n-te Rohrverbindung

- T: Tank (allgemein), unmittelbar an einem im Wesentlichen senkrechten Ventilverteilerbaum Bi angeschlossen
- T1: erster Tank in der vorg. Anordnung
- T2: zweiter Tank in der vorg. Anordnung
- T3: dritter Tank in der vorg. Anordnung
- Ti: i-ter Tank in der vorg. Anordnung
- Tn: n-ter Tank in der vorg. Anordnung

- T1a bis Tna: unterer Tankboden des jeweiligen Tanks T1 bis Tn oder T1* bis Tn*
- Tia: i-ter Tankboden

- T*: Tank (allgemein), über Rohrleitung Ri an einem im Wesentlichen senkrechten Ventilverteilerbaum Bi angeschlossen
- T1*: erster Tank in der vorg. Anordnung
- T2*: zweiter Tank in der vorg. Anordnung
- T3*: dritter Tank in der vorg. Anordnung
- Ti*: i-ter Tank in der vorg. Anordnung
- Tn*: n-ter Tank in der vorg. Anordnung

- V_{C}: Doppeldichtventil
- V_{R}: Doppelsitzventil
- V_{S}: doppeltdichtendes Scheibenventil

- W: Wärmeträgermedium

### Figuren 9, 10a bis 10c

- 20: Fördereinrichtung (Pumpe)
- 21: erstes Absperrventil
- 22: zweites Absperrventil

- P**: Prozessaggregat (allgemein), an einem im Wesentlichen waagerechten Ventilverteilerbaum Bi angeschlossen
- P1**: erstes Prozessaggregat der vorg. Anordnung
- P2**: zweites Prozessaggregat der vorg. Anordnung
- P3**: drittes Prozessaggregat der vorg. Anordnung
- Pi**: i-tes Prozessaggregat der vorg. Anordnung
- Pn**: n-tes Prozessaggregat der vorg. Anordnung

- T**: Tank (allgemein), an einem im Wesentlichen waagerechten Ventilverteilerbaum Bi angeschlossen
- T1**: erster Tank der vorg. Anordnung
- T2**: zweiter Tank der vorg. Anordnung
- T3**: dritter Tank der vorg. Anordnung
- Ti**: i-ter Tank der vorg. Anordnung
- Tn**: n-ter Tank der vorg. Anordnung

- U: Umlaufleitung (allgemein)
- U1: erste Umlaufleitung (am ersten Ventilverteilerbaum B1)
- U2: zweite Umlaufleitung (an B2)
- U3: dritte Umlaufleitung (an B3)
- Ui: i-te Umlaufleitung (an Bi)
- Un: n-te Umlaufleitung (an Bn)

- U*: parallele Umlaufleitung (allgemein)
- U1*: erste parallele Umlaufleitung (am ersten Ventilverteilerbaum B1)
- U2*: zweite parallele Umlaufleitung (an B2)
- U3*: dritte parallele Umlaufleitung (an B3)
- Ui*: i-te Umlaufleitung (an Bi)
- Un*: n-te Umlaufleitung (an Bn)

- Ux.1: erster Umlaufleitungsabschnitt (allgemein)
- Ux.2: zweiter Umlaufleitungsabschnitt (allgemein)
- Ux.3: dritter Umlaufleitungsabschnitt (allgemein)

- U1.1: erster Umlaufleitungsabschnitt der ersten Umlaufleitung
- Ui.1: erster Umlaufleitungsabschnitt der i-ten Umlaufleitung
- Un.1: erster Umlaufleitungsabschnitt der n-ten Umlaufleitung

- U1.2: zweiter Umlaufleitungsabschnitt der ersten Umlaufleitung
- Ui.2: zweiter Umlaufleitungsabschnitt der i-ten Umlaufleitung
- Un.2: zweiter Umlaufleitungsabschnitt der n-ten Umlaufleitung

- U1.3: dritter Umlaufleitungsabschnitt der ersten Umlaufleitung
- Ui.3: zweiter Umlaufleitungsabschnitt der i-ten Umlaufleitung
- Un.3: dritter Umlaufleitungsabschnitt der n-ten Umlaufleitung

## Patentansprüche

1. Vorrichtung zur Verrohrung von Prozessanlagen der Nahrungsmittel- und Getränkeindustrie, die einen Tank (T) einer der Prozessanlage und/oder ein Prozessaggregat (P) einer Prozessanlage, Ventile (V_{C}; V_{R}; V_{S}), ein Rohrsystem (2, 3, 4) und wenigstens einen Ventilverteilerbaum (B1, B2, ..., Bi, ..., Bn) umfasst, wobei
- der Tank (T) an einem unteren Tankboden des Tanks (T) und/oder das Prozessaggregat (P) jeweils mittels einer Rohrverbindung mit dem Rohrsystem (2, 3, 4) über die im Sitzbereich vermischungssicher ausgestalteten Ventile (V_{C}; V_{R}; V_{S}) verbunden ist,
- das Rohrsystem (2, 3, 4) aus wenigstens einer ersten Gruppe von Rohrleitungen (2.1, 2.2, ..., 2.i, ..., 2.n) besteht,
- der wenigstens eine Ventilverteilerbaum (B1, B2, ..., Bi, ..., Bn) als langgestrecktes hohles Gebilde (B1a, B2a, ..., Bia, ..., Bna) ausgeführt ist und wenigstens eine Anschlussöffnung (6a) zum Verbinden seines Innenraumes mit jeder der Rohrleitungen (2.1, 2.2, ..., 2.i, ..., 2.n) besitzt,
- wenigstens die erste Gruppe Rohrleitungen (2.1, 2.2, ..., 2.i, ..., 2.n) auf einer Seite des hohlen Gebildes (B1a, B2a, ..., Bia, ..., Bna) und im Bedarfsfall zusätzlich eine zweite Gruppe Rohrleitungen (3.1, 3.2, ..., 3.i, ..., 3.n) auf einer gegenüberliegenden Seite des hohlen Gebildes (B1a, B2a, ..., Bia, ..., Bna) an die zugeordnete Anschlussöffnung (6a) heran- und an dem hohlen Gebilde (B1a, B2a, ..., Bia, ..., Bna) vorbeigeführt ist,
- jedes der Ventile (V_{C}; V_{R}; V_{S}),
- zwischen zwei axial beabstandeten Abdichtungsstellen einen Leckagehohlraum (14) aufweist, der über wenigstens einen Verbindungsweg mit der Umgebung des Ventils (V_{C}; V_{R}; V_{S}) verbunden ist, und
- mit einem Ventilgehäuse (7) in der Verbindung zwischen der Rohrleitung (2.1, 2.2, ..., 2.i, ..., 2.n; 3.1, 3.2, ..., 3.i, ..., 3.n; 4) und der zugeordneten Anschlussöffnung (6a) angeordnet ist, wobei diese Verbindung in unmittelbarer Nähe zum hohlen Gebilde (B1a, B2a, ..., Bia, ..., Bna) schaltet,
**dadurch gekennzeichnet, dass**
die Vorrichtung eine der folgenden Kombinationen (i; ii) aus den nachstehenden Merkmalen (a), (b), (c) umfasst:
(i) Merkmale [(a) oder (b)] und (c);
(ii) Merkmale (a) und (b) und (c),
wobei:
gemäß Merkmal (a) der jeweilige Ventilverteilerbaum (B1, B2, ..., Bi, ..., Bn) unmittelbar im unteren Tankboden (T1a, T2a, ..., Tia, ..., Tna) des jeweils zugeordneten Tanks (T; T1, T2, ..., Ti, ..., Tn) ausmündet,
gemäß Merkmal (b) der jeweilige Ventilverteilerbaum (B1, B2, ..., Bi, ..., Bn) über eine zugeordnete Rohrverbindung (R; R1, R2, ..., Ri, ..., Rn; Ux.1; U1.1, U2.1, U3.1, ..., Ui.1, ..., Un.1) mit dem zugeordneten Prozessaggregat (P; P1, P2, ..., Pi, ..., Pn; P**; P1**, P2**, ..., Pi**, ..., Pn**) oder dem unteren Tankboden (T1a , T2a, ..., Tia, ..., Tna) des Tanks (T*; T1*, T2*, ..., Ti*, ..., Tn*; T**; T1**, T2**, ..., Ti**, ..., Tn**) verbunden ist und die Rohrverbindung (R; Ux.1) in das tank- oder prozessaggregatseitige Ende des Ventilverteilerbaumes (B1, B2, ..., Bi, ..., Bn) einmündet,
gemäß Merkmal (c) der Ventilverteilerbaum (B1, B2, ..., Bi, ..., Bn) mit dem gesamten Innenraum des hohlen Gebildes (B1a, B2a, ..., Bia, ..., Bna) Teil einer über den Tank (T; T*; T**) oder das Prozessaggregat (P; P**) geführten Umlaufleitung (U; U1, U2, U3, ..., Ui, ..., Un) ist, die mit einem ersten Umlaufleitungsabschnitt (Ux.1), der das hohle Gebilde (B1a, B2a, ..., Bia, ..., Bna) als integralen Bestandteil umfasst, an den Tank (T; T*; T**) oder das Prozessaggregat (P; P**) angeschlossen ist, und die Umlaufleitung (U; U1, U2, U3, ..., Ui, ..., Un) über einen dritten Umlaufleitungsabschnitt (Ux.3), in dem eine Fördereinrichtung (20) angeordnet ist, in den Tank (T; T*; T**) oder das Prozessaggregat (P; P**) zurückgeführt ist.

2. Vorrichtung zur Verrohrung von Prozessanlagen der Nahrungsmittel- und Getränkeindustrie, die einen Tank (T) einer Prozessanlage und/oder ein Prozessaggregat (P) einer Prozessanlage, Ventile (V_{R}), ein Rohrsystem (2, 3, 4) und wenigstens einen Ventilverteilerbaum (B1, B2, ..., Bi, ..., Bn) umfasst, wobei
- der Tank (T) an einem unteren Tankboden des Tanks (T) und/oder das Prozessaggregat (P) jeweils mittels einer Rohrverbindung mit dem Rohrsystem (2, 3, 4) über die Ventile (V_{R}), ausgeführt als im Sitzbereich vermischungssicher ausgestaltete Doppelsitzventile (V_{R}), verbunden ist,
- das Rohrsystem (2, 3, 4) aus wenigstens einer ersten Gruppe von Rohrleitung (2.1, 2.2, ..., 2.i, ..., 2.n;) besteht,
- der wenigstens eine Ventilverteilerbaum (B1, B2, ..., Bi, ..., Bn) als langgestrecktes hohles Gebilde (B1a, B2a, ..., Bia, ..., Bna) ausgeführt ist und wenigstens eine Anschlussöffnung (6a) zum Verbinden seines Innenraumes mit jeder der Rohrleitungen (2.1, 2.2, ..., 2.i, ..., 2.n) besitzt,
- wenigstens die erste Gruppe Rohrleitungen (2.1, 2.2, ..., 2.i, ..., 2.n) auf einer Seite des hohlen Gebildes (B1a, B2a, ..., Bia, ..., Bna) und im Bedarfsfall zusätzlich eine zweite Gruppe Rohrleitungen (3.1, 3.2, ..., 3.i, ..., 3.n) auf einer gegenüberliegenden Seite des hohlen Gebildes (B1a, B2a, ..., Bia, ..., Bna) an die zugeordnete Anschlussöffnung (6a) heran- und an dem hohlen Gebilde (B1a, B2a, ..., Bia, ..., Bna) vorbeigeführt ist,
- ein Doppelsitzventil (V_{R}) in jeder Verbindung zwischen der Rohrleitung (2.1, 2.2, ..., 2.i, ..., 2.n; 3.1, 3.2, ..., 3.i, ..., 3.n) und der zugeordneten Anschlussöffnung (6a) angeordnet ist und diese Verbindung in unmittelbarer Nähe zum hohlen Gebilde (B1a, B2a, ..., Bia, ..., Bna) schaltet,
- jedes Doppelsitzventil (V_{R}) mit zwei seriell angeordneten Schließgliedern (10,11) ausgebildet ist, die in der Schließstellung des Ventils das Überströmen von Fluiden vom hohlen Gebilde (B1a, B2a, ..., Bia, ..., Bna) in das Ventilgehäuse (7) verhindern,
- an letzteres jeweils eine der Rohrleitungen (2.1, 2.2, ..., 2.i, ..., 2.n; 3.1, 3.2, ..., 3.i, ..., 3.n) angeschlossen ist,
- wobei die Schließglieder (10, 11) sowohl in der Schließ- als auch in der Offenstellung einen Leckagehohlraum (14) begrenzen, der mindestens einen Verbindungsweg mit der Umgebung des Doppelsitzventils (V_{R}) aufweist,
- das erste Schließglied (10) unabhängig angetrieben ist und bei seiner Öffnungsbewegung am als Sitzteller ausgebildeten zweiten Schließglied (11) zur Anlage kommt und dieses gleichfalls in die Offenstellung überführt,
- das zweite Schließglied (11) an seinem dem ersten Schließglied (10) zugewandten Ende eine zweite Sitzdichtung (13) aufweist, die mit einer an eine zylindrische erste Sitzfläche (6b) angrenzenden zweiten Sitzfläche (6c) zusammenwirkt,
- das als Schieberkolben ausgebildete erste Schließglied (10) eine radial wirkende erste Sitzdichtung (12) aufweist,
- die Anschlussöffnung (6a) die zylindrische erste Sitzfläche (6b) ausbildet und die erste Sitzdichtung (12) in der Schließstellung des Doppelsitzventils (V_{R}) in der ersten Sitzfläche (6b) dichtend Aufnahme findet, und
- mit konzentrisch ineinander angeordneten Ventilstangen (10a, 11a) für die Schließglieder (10, 11), die einseitig durch das Ventilgehäuse (7) hindurch- und aus diesem herausgeführt sind,
**dadurch gekennzeichnet, dass**
die Vorrichtung eine der folgenden Kombinationen (i; ii) aus den nachstehenden Merkmalen (a), (b), (c) umfasst:
(i) Merkmale [(a) oder (b)] und (c);
(ii) Merkmale (a) und (b) und (c),
wobei
gemäß Merkmal (a) der jeweilige Ventilverteilerbaum (B1, B2, ..., Bi, ..., Bn) unmittelbar im unteren Tankboden (T1a , T2a, ..., Tia, ..., Tna) des jeweils zugeordneten Tanks (T; T1, T2, ..., Ti, ..., Tn) ausmündet,
gemäß Merkmal (b) der jeweilige Ventilverteilerbaum (B1, B2, ..., Bi, ..., Bn) über eine zugeordnete Rohrverbindung (R; R1, R2, ..., Ri, ..., Rn; Ux.1; U1.1, U2.1, U3.1, ..., Ui.1, ..., Un.1) mit dem zugeordneten Prozessaggregat (P; P1, P2, ..., Pi, ..., Pn; P**; P1**, P2**, ..., Pi**, ..., Pn**) oder dem unteren Tankboden (T1a , T2a, ..., Tia, ..., Tna) des Tanks (T*; T1*, T2*, ..., Ti*, ..., Tn*; T**; T1**, T2**, ..., Ti**, ..., Tn**) verbunden ist und die Rohrverbindung (R; Ux.1) in das tank- oder prozessaggregatseitige Ende des Ventilverteilerbaumes (B1, B2, ..., Bi, ..., Bn) einmündet, und
gemäß Merkmal (c) der Ventilverteilerbaum (B1, B2, ..., Bi, ..., Bn) mit dem gesamten Innenraum des hohlen Gebildes (B1a, B2a, ..., Bia, ..., Bna) Teil einer über den Tank (T; T*; T**) oder das Prozessaggregat (P; P**) geführten Umlaufleitung (U; U1, U2, U3, ..., Ui, ..., Un) ist, die mit einem ersten Umlaufleitungsabschnitt (Ux.1), der das hohle Gebilde (B1a, B2a, ..., Bia, ..., Bna) als integralen Bestandteil umfasst, an den Tank (T; T*; T**) oder das Prozessaggregat (P; P**) angeschlossen ist, und die Umlaufleitung (U; U1, U2, U3, ..., Ui, ..., Un) über einen dritten Umlaufleitungsabschnitt (Ux.3), in dem eine Fördereinrichtung (20) angeordnet ist, in den Tank (T; T*; T**) oder das Prozessaggregat (P; P**) zurückgeführt ist.

3. Vorrichtung nach einem der vorhergehenden Ansprüche,
**dadurch gekennzeichnet,**
**dass** der Ventilverteilerbaum (B1, B2, ..., Bi, ..., Bn) in Gänze oder in Teilbereichen doppelwandig ausgebildet ist, und dass der einen Wärmeaustauscher (15) bildende Zwischenraum (15c) oder die einen Wärmetauscher (15) bildenden Zwischenräume (15c) jeweils mit einem Zulauf- und einem Ablaufanschluss (15a, 15b) für ein Wärmeträgermedium (W) verbunden ist (sind).

4. Vorrichtung nach einem der vorhergehenden Ansprüche,
**dadurch gekennzeichnet,**
**dass** der Ventilverteilerbaum (B1, B2, ..., Bi, ..., Bn) einen von unten nach oben aufsteigenden, im Regelfall einen senkrechten Verlauf aufweist, und dass die erste und die zweite Gruppe Rohrleitungen (2.1, 2.2, ..., 2.i, ..., 2.n; 3.1, 3.2, ..., 3.i, ..., 3.n) in jeweils reihenförmiger Anordnung untereinander, in zueinander und zur Längsachse des hohlen Gebildes parallelen Ebenen angeordnet sind.

5. Vorrichtung nach einem der vorhergehenden Ansprüche,
**dadurch gekennzeichnet,**
**dass** der Ventilverteilerbaum (B1, B2, ..., Bi, ..., Bn) quer, im Regelfall waagerecht verläuft, und dass die erste und die zweite Gruppe Rohrleitungen (2.1, 2.2, ..., 2.i, ..., 2.n; 3.1, 3.2, ..., 3.i, ..., 3.n) jeweils in zueinander parallelen Ebenen nebeneinander angeordnet und auf einer Seite oder auf gegenüberliegenden Seiten des hohlen Gebildes (B1a, B2a, ..., Bia, ..., Bna) und in sich mit dessen Längsachse (L) kreuzenden Ebenen an diesem vorbeigeführt sind.

6. Vorrichtung nach Anspruch 1,
**dadurch gekennzeichnet,**
**dass** ein zweiter Umlaufleitungsabschnitt (Ux.2), der wenigstens das hohle Gebilde (B1a, B2a, ..., Bia, ..., Bna) überbrückt, als Bypass-Leitung zum ersten Umlaufleitungsabschnitt (Ux.1) ausgeführt und mit letzterem beiderseits zusammengeführt ist.

7. Vorrichtung nach einem der Ansprüche 2 bis 6,
**dadurch gekennzeichnet,**
• **dass** das hohlstangenförmige zweite Schließglied (11) an seinem die zweite Sitzdichtung (13) aufnehmenden Endabschnitt innenseits eine zylindrische Aufnahmebohrung (11b) aufweist, die durchmessergleich mit der zylindrischen ersten Sitzfläche (6b) ausgebildet ist,
• und **dass** in der Schließstellung des zweiten Schließgliedes (11) die Aufnahmebohrung (11b) und die erste Sitzfläche (6b) bündig ineinander übergehen.

8. Vorrichtung nach einem der Ansprüche 2 bis 7,
**dadurch gekennzeichnet,**
**dass** das zweite Schließglied (11) mit einer schließgliedseitigen Anschlagfläche (11d) über einen metallischen Anschlag an der zweiten Sitzfläche (6c) verfügt, wobei eine zugeordnete sitzflächenseitige Anschlagfläche (6e) unmittelbar an die erste Sitzfläche (6b) angrenzt.

9. Vorrichtung nach einem der vorhergehenden Ansprüche,
**dadurch gekennzeichnet,**
**dass**, bezogen auf die Anordnungslage, die Längsachse des Ventilgehäuses (7) waagerecht oder, von der Anschlussöffnung (6a) aus gesehen, bis zu einem Winkel gegen die Waagerechte abfallend verläuft, und dass dabei eine innere Umfangswand (11c) des Leckagehohlraumes (14) schwerkraftseitig zu dessen Austrittsöffnung hin ein Gefälle aufweist.

10. Vorrichtung nach einem der vorhergehenden Ansprüche,
**dadurch gekennzeichnet,**
**dass** die Rohrleitung (2.1, 2.2, ..., 2.i, ..., 2.n; 3.1, 3.2, ..., 3.i, ..., 3.n; 4) durchgängig mit einem unversperrten, Kreisform aufweisenden Durchtrittsquerschnitt ausgeführt und an einem jeweiligen Ventilgehäuse (7) des vermischungssicheren Ventils (V_{R}; V_{R}; V_{S}) oder dem jeweiligen Ventilgehäuse (7) des Doppelsitzventils (V_{R}) vorbeigeführt und mit letzterem jeweils fluidgängig verbunden ist.

11. Vorrichtung nach einem der vorhergehenden Ansprüche,
**dadurch gekennzeichnet,**
**dass** die Ventilverteilerbäume (B1, B2, ..., Bi, ..., Bn) eine reihen- oder matrixförmige Anordnung aufweisen.

12. Vorrichtung nach einem der vorhergehenden Ansprüche,
**dadurch gekennzeichnet,**
**dass** das hohle Gebilde (B1a, B2a, ..., Bia, ..., Bna) jeweils aus einer Aggregation von einzelnen Gebildeabschnitten (5) zusammengesetzt ist, die in Richtung der Längsachse (L) des hohlen Gebildes fluiddurchgängig miteinander verbunden sind und jeweils mindestens eine Anschlussöffnung (6a) aufweisen.

13. Vorrichtung nach einem der vorhergehenden Ansprüche,
**dadurch gekennzeichnet,**
**dass** in den Ventilverteilerbaum (B1, B2, ..., Bi, ..., Bn) in dessen Längsachse (L) eine Rührerwelle (16b) eingreift, die wenigstens einen Rührer (16a) einer Rühreinrichtung (16) trägt.

14. Vorrichtung nach Anspruch 13,
**dadurch gekennzeichnet,**
**dass** die Rührerwelle (16b) entweder über einen ersten Antrieb (A) von oben oder einen zweiten Antrieb (A*) von unten angetrieben ist.

15. Vorrichtung nach Anspruch 13,
**dadurch gekennzeichnet,**
**dass** der wenigstens eine Rührer (16a) im vom Teilbereich des Wärmeaustauschers (15) umgrenzten Abschnitt des Ventilverteilerbaumes (B1, B2, ..., Bi, ..., Bn) angeordnet ist.

## Claims

1. Device for the piping of processing systems in the food and beverage industry that comprises a tank (T) of a processing system and/or a processing unit (P) of a processing system, valves (Vc; V_{R}; V_{S}), a pipe system (2, 3, 4) and at least one valve distributor tree (B1, B2, ..., Bi, ..., Bn),
wherein
- the tank, (T) at a bottom tank floor of the tank (T), and/or the processing unit (P) respectively is connected by means of a pipe connection to the pipe system (2, 3, 4) via the valves (V_{c}; V_{R}; V_{S}) designed mix-proof in the seat area,
- the pipe system (2, 3, 4) consists of at least one first group of pipelines (2.1, 2.2, ..., 2.i, ..., 2.n),
- the at least one valve distributor tree (B1, B2, ..., Bi, ..., Bn) is designed as an elongated hollow structure (B1a, B2a, ..., Bia, ..., Bna) and possesses at least one connector opening (6a) for connecting its interior to each of the pipelines (2.1, 2.2,..., 2.i, ..., 2.n),
- at least the first group of pipelines (2.1, 2.2, ..., 2.i, ..., 2.n) on one side of the hollow structure (B1a, B2a, ..., Bia, ..., Bna) and, if necessary, also a second group of pipelines (3.1, 3.2, ..., 3.i, ..., 3.n) on an opposite side of the hollow structure (B1a, B2a, ..., Bia, ..., Bna) run to the assigned connector opening (6a) and past the hollow structure (B1a, B2a, ..., Bia, ..., Bna),
- each of the valves (Vc; V_{R}; V_{S}),
- has a leakage chamber (14) between two axially spaced sealing points that is connected via at least one connecting path to the surroundings of the valve (V_{C}; V_{R}; Vs), and
- is arranged with a valve housing (7) in the connection between the pipeline (2.1, 2.2, ..., 2.i, ..., 2.n; 3.1, 3.2, ..., 3.i, ..., 3.n; 4) and the assigned connector opening (6a), wherein this connection switches in the immediate vicinity of the hollow structure (B1a, B2a, ..., Bia, ..., Bna),
**characterized in that**
the device comprises one of the following combinations (i; ii) from the following features (a), (b), (c):
(i) features [(a) or (b)] and (c);
(ii) features (a) and (b) and (c),
wherein
according to feature (a), the respective valve distributor tree (B1, B2, ..., Bi, ..., Bn) opens directly into the lower tank bottom (T1a, T2a, ..., Tia, ..., Tna) of each assigned tank (T; T1, T2, ..., Ti, ..., Tn),
according to feature (b), the respective valve distributor tree (B1, B2, ..., Bi, ..., Bn) is connected by an assigned pipe connection (R; R1, R2, ..., Ri, ..., Rn; Ux.1; U1.1, U2.1, U3.1, ..., Ui.1, ..., Un.1) to the assigned processing unit (P; P1, P2, ..., Pi, ..., Pn; P**; P1**, P2**, ..., Pi**, ..., Pn**) or the bottom tank floor (T1a, T2a, ..., Tia, ..., Tna) of the tank (T*; T1*, T2*, ..., Ti*, ..., Tn*; T**; T1**, T2**, ..., Ti**, ..., Tn**), and the pipe connection (R; Ux.1) opens into the tank-side or processing unit-side end of the valve distributor tree (B1, B2, ..., Bi, ..., Bn),
according to feature (c), the valve distributor tree (B1, B2, ..., Bi, ..., Bn) with the entire interior of the hollow structure (B1a, B2a, ..., Bia, ..., Bna) is part of a circulating line (U; U1, U2, U3, ..., Ui, ..., Un) that runs via the tank (T; T*; T**) or the processing unit (P; P**) and that, by a first circulating line section (Ux.1) comprising the hollow structure (B1a, B2a, ..., Bia, ..., Bna) as an integral component, is connected to the tank (T; T*; T**) or the processing unit (P; P**), and the circulating line (U; U1, U2, U3, ..., Ui, ..., Un) is returned to the tank (T; T*; T**) or the processing unit (P; P**) via a third circulating line section (Ux.3) in which a delivery apparatus (20) is arranged.

2. The device for the piping of processing systems in the food and beverage industry that comprises a tank (T) of a processing system and/or a processing unit (P) of a processing system, valves (V_{R}), a pipe system (2, 3, 4) and at least one valve distributor tree (B1, B2, ..., Bi, ..., Bn), wherein
- the tank, (T) at a bottom tank floor of the tank (T), and/or the processing unit (P), respectively is connected by means of a pipe connection to the pipe system (2, 3, 4) via the valves (V_{R}) designed as mix-proof double-seat valves (V_{R}) in the seat area,
- the pipe system (2, 3, 4) consists of at least one first group of pipelines (2.1, 2.2, ..., 2.i, ..., 2.n),
- the at least one valve distributor tree (B1, B2, ..., Bi, ..., Bn) is designed as an elongated hollow structure (B1a, B2a, ..., Bia, ..., Bna) and possesses at least one connector opening (6a) for connecting its interior to each of the pipelines (2.1, 2.2, ..., 2.i, ..., 2.n),
- at least the first group of pipelines (2.1, 2.2,..., 2.i, ..., 2.n) on one side of the hollow structure (B1a, B2a, ..., Bia, ..., Bna) and, if necessary, also a second group of pipelines (3.1, 3.2, ..., 3.i, ..., 3.n) on an opposite side of the hollow structure (B1a, B2a, ..., Bia, ..., Bna) runs to the assigned connector opening (6a) and past the hollow structure (B1a, B2a, ..., Bia, ..., Bna),
- a double seat valve (V_{R}) is arranged in each connection between the pipeline (2.1, 2.2, ..., 2.i, ..., 2.n; 3.1, 3.2, ..., 3.i, ..., 3.n) and the associated connector opening (6a), and this connection switches in the immediate vicinity to the hollow structure (B1a, B2a, ..., Bia, ..., Bna),
- each double seat valve (V_{R}) is designed with two serially-arranged closing elements (10, 11) that, when the valve is in the closed position, prevent fluid from overflowing from the hollow structure (B1a, B2a, ..., Bia, ..., Bna) into the valve housing (7),
- one of the pipelines (2.1, 2.2, ..., 2.i, ..., 2.n; 3.1, 3.2, ..., 3.i, ..., 3.n) is connected in each case to the latter,
- wherein the closing elements (10, 11) in both the closed and in the open position delimit a leakage chamber (14) that has at least one connection path to the surroundings of the double seat valve (V_{R}),
- the first closing element (10) is independently driven and, during its opening movement, comes into contact with the second closing element (11) designed as a seat plate and also switches it into the open position,
- the second closing element (11), at its end facing the first closing element (10), has a second seat seal (13) that acts together with a second seat surface (6c) bordering a cylindrical first seat surface (6b),
- the first closing element (10) designed as a spool has a radially-acting first seat seal (12),
- the connecting opening (6a) forms the cylindrical, first seat surface (6b), and the first seat seal (12) is sealingly seated in the first seat surface (6b) when the double seat valve (V_{R}) is in the closed position, and
- having valve rods (10a, 11a) arranged concentrically within each other for the closing elements (10, 11) which run on one side through and out of the valve housing (7),
**characterized in that**
the device comprises one of the following combinations (i; ii) from the following features (a), (b), (c):
(I) features [(a) or (b)] and (c);
(ii) features (a) and (b) and (c),
wherein
according to feature (a), the respective valve distributor tree (B1, B2, ..., Bi, ..., Bn) opens directly into the lower tank bottom (T1a, T2a, ...,Tia, ..., Tna) of each assigned tank (T; T1, T2, ..., Ti, ..., Tn),
according to feature (b), the respective valve distributor tree (B1, B2, ..., Bi, ..., Bn) is connected by an assigned pipe connection (R; R1, R2, ..., Ri, ..., Rn; Ux.1; U1.1, U2.1, U3.1, ..., Ui.1, ..., Un.1) to the assigned processing unit (P; P1, P2, ..., Pi, ..., Pn; P**; P1**, P2**, ..., Pi**, ..., Pn**) or the bottom tank floor (T1a, T2a, ..., Tia, ..., Tna) of the tank (T*; T1*, T2*, ..., Ti*, ..., Tn*; T**; T1**, T2**, ..., Ti**, ..., Tn**), and the pipe connection (R; Ux.1) opens into the tank-side or processing unit-side end of the valve distributor tree (B1, B2, ..., Bi, ..., Bn), and
according to feature (c), the valve distributor tree (B1, B2, ..., Bi, ..., Bn) with the entire interior of the hollow structure (B1a, B2a, ..., Bia, ..., Bna) is part of a circulating line (U; U1, U2, U3, ..., Ui, ..., Un) that runs via the tank (T; T*; T**) or the processing unit (P; P**) and that, by a first circulating line section (Ux.1) comprising the hollow structure (B1a, B2a, ..., Bia, ..., Bna) as an integral component, is connected to the tank (T; T*; T**) or the processing unit (P; P**), and the circulating line (U; U1, U2, U3, ..., Ui, ..., Un) is returned to the tank (T; T*; T**) or the processing unit (P; P**) via a third circulating line section (Ux.3) in which a delivery apparatus (20) is arranged.

3. The device according to one of the preceding claims,
**characterized in that**
the valve distributor tree (B1, B2, ..., Bi, ..., Bn) is designed entirely or sectionally double-wall, and the gap (15c) forming a heat exchanger (15), or the gaps (15c) forming a heat exchanger (15), is/are each connected to a feed and a drain connection (15a, 15b) for a heat transfer medium (W).

4. The device according to one of the preceding claims,
**characterized in that**
the valve distributor tree (B1, B2, ..., Bi, ..., Bn) has a generally perpendicular progression from bottom to top, and the first and second group of pipelines (2.1, 2.2, ..., 2.i, ..., 2.n; 3.1, 3.2, ..., 3.i, ..., 3.n) are arranged in a rowed arrangement among each other in planes parallel to each other and to the longitudinal axis of the hollow structure.

5. The device according to one of the preceding claims,
**characterized in that**
the valve distribution tree (B1, B2, ..., Bi, ..., Bn) runs transversely, generally horizontally, and the first and the second group of pipelines (2.1, 2.2,..., 2.i, ..., 2.n; 3.1, 3.2, ..., 3.i, ..., 3.n) are each arranged next to each other in planes parallel to each other, and on the one side or on opposite sides of the hollow structure (B1a, B2a, ..., Bia, ..., Bna), and run past it in the planes intersecting its longitudinal axis (L).

6. The device according to claim 1,
**characterized in that**
a second circulating line section (Ux.2) that bridges at least the hollow structure (B1a, B2a, ..., Bia, ..., Bna) is designed as a bypass line to the first circulating line section (Ux.1) and is joined to the latter on both sides.

7. The device according to one of claims 2 to 6,
**characterized in that**
• at its end section receiving the second seat seal (13), the second closing element (11), designed as a hollow rod, has a cylindrical locating hole (11b) on the inside that is formed with the same diameter as the cylindrical first seat surface (6b),
• and that when the second closing element (11) is in the closed position, the locating hole (11b) and the first seat surface (6b) transition flush into each other.

8. The device according to one of claims 2 to 7,
**characterized in that**
with a closing element-side stop surface (11d), the second closing element (11) has a metallic stop at the second seat surface (6c), wherein an assigned seat-surface-side stop surface (6e) directly borders the first seat surface (6b).

9. The device according to one of the preceding claims,
**characterized in that**
relative to the arrangement position, the longitudinal axis of the valve housing (7) is horizontal or, viewed from the connector opening (6a), runs downward at an angle to horizontal, and an inner peripheral wall (11c) of the leakage chamber (14) has a slope on the gravity side towards its outlet opening.

10. The device according to one of the preceding claims,
**characterized in that**
the pipeline (2.1, 2.2, ..., 2.i, ..., 2.n; 3.1, 3.2, ..., 3.i, ..., 3.n; 4) is designed continuous with an unobstructed passage cross-section having a circular shape, and runs past a respective valve housing (7) of the mix-proof valve (V_{R}; V_{R}; V_{S}) or the respective valve housing (7) of the double seat valve (V_{R}), and is fluidly connected in each case to the latter.

11. The device according to one of the preceding claims,
**characterized in that**
the valve distributor trees (B1, B2, ..., Bi, ..., Bn) have an arrangement forming rows or a matrix.

12. The device according to one of the preceding claims,
**characterized in that**
the hollow structure (B1a, B2a, ..., Bia, ..., Bna) is composed in each case of an aggregation of individual structure sections (5) which are fluidically connected together in the direction of the longitudinal axis (L) of the hollow structure, and have at least one connector opening (6a) in each case.

13. The device according to one of the preceding claims,
**characterized in that**
an agitator shaft (16b) engages in the valve distributor tree (B1, B2, ..., Bi, ..., Bn) in its longitudinal axis (L) and bears at least one stirrer (16a) of a stirring apparatus (16).

14. The device according to claim 13,
**characterized in that**
the agitator shaft (16b) is either driven from above by a first drive (A), or from below by a second drive (A*).

15. The device according to claim 13,
**characterized in that**
the at least one agitator (16a) is arranged in the section of the valve distributor tree (B1, B2, ..., Bi, ..., Bn) surrounded by a portion of the heat exchanger (15).

## Revendications

1. Système de tuyauterie pour des installations de traitement des industries alimentaires et des boissons, lequel comporte une cuve (T) d'une installation de traitement et/ou une unité de traitement (P) d'une installation de traitement, des soupapes (Vc ; V_{R} ; Vs), un système de tuyaux (2, 3, 4) et au moins un arbre de distribution à soupapes (B1, B2, ..., Bi, ..., Bn), dans lequel
- la cuve (T) au niveau d'un fond de cuve inférieur de la cuve (T) et/ou l'unité de traitement (P) est reliée respectivement au moyen d'un raccord de tuyauterie au système de tuyaux (2, 3, 4) par le biais des soupapes (Vc ; V_{R} ; Vs) conçues de façon étanche au mélange dans la région du siège,
- le système de tuyaux (2, 3, 4) est constitué d'au moins un premier groupe de conduites (2.1, 2.2, ..., 2.i, ..., 2.n),
- l'au moins un arbre de distribution à soupapes (B1, B2, ..., Bi, ..., Bn) est réalisé comme une structure creuse allongée (B1a, B2a, ..., Bia, ..., Bna) et possède au moins une ouverture de raccordement (6a) permettant de raccorder son espace intérieur à chacune des conduites (2.1, 2.2, ..., 2.i, ..., 2.n),
- au moins le premier groupe de conduites (2.1, 2.2, ..., 2.i, ..., 2.n), sur un côté de la structure creuse (B1a, B2a, ..., Bia, ..., Bna), et le cas échéant également un deuxième groupe de conduites (3.1, 3.2, ..., 3.i, ..., 3.n) sur un côté opposé de la structure creuse (B1a, B2a, ..., Bia, ..., Bna), est déplacé vers l'ouverture de raccordement (6a) correspondante et devant la structure creuse (B1a, B2a, ..., Bia, ..., Bna)
- chacune des soupapes (V_{C} ; V_{R} ; V_{S})
- présente une cavité de fuite (14) entre deux points d'étanchéité axialement espacées, laquelle est reliée à l'environnement de la soupape (V_{C} ; V_{R} ; V_{S}) par le biais d'au moins un chemin de raccordement, et
- est disposée avec un boîtier de soupape (7) dans le raccord entre la conduite (2.1, 2.2, ..., 2.i, ..., 2.n ; 3.1, 3.2, ..., 3.i, ..., 3.n ; 4) et l'ouverture de raccordement (6a) correspondante, ce raccord commutant à proximité immédiate de la structure creuse (B1a, B2a, ..., Bia, ..., Bna),
**caractérisé en ce que**
le système comporte l'une des combinaisons suivantes (i ; ii) des caractéristiques ci-après (a), (b), (c) :
(i) caractéristiques [(a) ou (b)] et (c) ;
(ii) caractéristiques (a) et (b) et (c),
où :
selon la caractéristique (a), l'arbre de distribution à soupapes (B1, B2, ..., Bi, ..., Bn) respectif débouche directement dans le fond de cuve inférieur (T1a, T2a, ..., Tia, ..., Tna) de la cuve (T ; T1, T2, ..., Ti, ..., Tn) respectivement correspondante,
selon la caractéristique (b), l'arbre de distribution à soupapes (B1, B2, ..., Bi, ..., Bn) respectif est relié à l'unité de traitement (P ; P1, P2, ..., Pi, ..., Pn ; P** ; P1**, P2**, ..., Pi**, ..., Pn**) correspondante ou au fond de cuve inférieur (T1a, T2a, ..., Tia, ..., Tna) de la cuve (T* ; T1*, T2*, ..., Ti*, ..., Tn* ; T**, T1**, T2**, ..., Ti**, ..., Tn**) par le biais d'un raccord de tuyauterie (R ; R1, R2, ..., Ri, ..., Rn ; Ux.1 ; U1.1, U2.1, U3.1, ..., Ui.1, ..., Un.1) correspondant, et le raccord de tuyauterie (R ; Ux.1) débouche dans l'extrémité côté cuve ou côté unité de traitement de l'arbre de distribution à soupapes (B1, B2, ..., Bi, ..., Bn),
selon la caractéristique (c), l'arbre de distribution à soupapes (B1, B2, ..., Bi, ..., Bn) fait partie, avec l'ensemble de l'espace intérieur de la structure creuse (B1a, B2a, ..., Bia, ..., Bna), d'une conduite de circulation (U ; U1, U2, U3, ..., Ui, ..., Un) passant par la cuve (T ; T* ; T**) ou par l'unité de traitement (P ; P**), laquelle est raccordée à la cuve (T ; T*, T**) ou à l'unité de traitement (P ; P**) par une première section de conduite de circulation (Ux.1) comportant la structure creuse (B1a, B2a, ..., Bia, ..., Bna) comme partie intégrante, et la conduite de circulation (U ; U1, U2, U3, ..., Ui, ..., Un) est renvoyée dans la cuve (T ; T* ; T**) ou dans l'unité de traitement (P ; P**) par le biais d'une troisième section de conduite de circulation (Ux.3) dans laquelle est disposé un dispositif de transport (20).

2. Système de tuyauterie pour des installations de traitement des industries alimentaires et des boissons, lequel comporte une cuve (T) d'une installation de traitement et/ou une unité de traitement (P) d'une installation de traitement, des soupapes (V_{R}), un système de tuyaux (2, 3, 4) et au moins un arbre de distribution à soupapes (B1, B2, ..., Bi, ..., Bn), dans lequel
- la cuve (T) au niveau d'un fond de cuve inférieur de la cuve (T) et/ou l'unité de traitement (P) est reliée respectivement au moyen d'un raccord de tuyauterie au système de tuyaux (2, 3, 4) par le biais des soupapes (V_{R}) réalisées comme des soupapes à double siège (V_{R}) conçues de façon étanche au mélange dans la région du siège,
- le système de tuyaux (2, 3, 4) est constitué d'au moins un premier groupe de conduites (2.1, 2.2, ..., 2.i, ..., 2.n),
- l'au moins un arbre de distribution à soupapes (B1, B2, ..., Bi, ..., Bn) est réalisé comme une structure creuse allongée (B1a, B2a, ..., Bia, ..., Bna) et possède au moins une ouverture de raccordement (6a) permettant de raccorder son espace intérieur à chacune des conduites (2.1, 2.2, ..., 2.i, ..., 2.n),
- au moins le premier groupe de conduites (2.1, 2.2, ..., 2.i, ..., 2.n), sur un côté de la structure creuse (B1a, B2a, ..., Bia, ..., Bna), et le cas échéant également un deuxième groupe de conduites (3.1, 3.2, ..., 3.i, ..., 3.n) sur un côté opposé de la structure creuse (B1a, B2a, ..., Bia, ..., Bna), est déplacé vers l'ouverture de raccordement (6a) correspondante et devant la structure creuse (B1a, B2a, ..., Bia, ..., Bna),
- une soupape à double siège (V_{R}) est disposé dans chaque raccord entre la conduite (2.1, 2.2, ..., 2.i, ..., 2.n ; 3.1, 3.2, ..., 3.i, ..., 3.n) et l'ouverture de raccordement (6a) correspondante, et ce raccord commute à proximité immédiate de la structure creuse (B1a, B2a, ..., Bia, ..., Bna),
- chaque soupape à double siège (V_{R}) est conçue avec deux organes de fermeture (10, 11) disposés en série, lesquels empêchent le passage de fluides hors de la structure creuse (B1a, B2a, ..., Bia, ..., Bna) dans le boîtier de soupape (7) dans la position de fermeture de la soupape,
- l'une des conduites (2.1, 2.2, ..., 2.i, ..., 2.n ; 3.1, 3.2, ..., 3.i, ..., 3.n) est raccordée respectivement à ce dernier,
- dans lequel les organes de fermeture (10, 11) délimitent une cavité de fuite (14) aussi bien dans la position de fermeture que dans la position d'ouverture, laquelle présente au moins un chemin de raccordement à l'environnement de la soupape à double siège (V_{R}),
- le premier organe de fermeture (10) est actionné indépendamment et s'applique sur le deuxième organe de fermeture (11) conçu comme un plateau d'appui lors de son mouvement d'ouverture et fait également passer celui-ci dans la position d'ouverture,
- le deuxième organe de fermeture (11) présente une deuxième étanchéité de siège (13) à son extrémité tournée vers le premier organe de fermeture (10), laquelle coopère avec une deuxième surface d'appui (6c) adjacente à une première surface d'appui cylindrique (6b),
- le premier organe de fermeture (10) conçu comme un piston-tiroir présente une première étanchéité de siège (12) agissant radialement,
- l'ouverture de raccordement (6a) forme la première surface d'appui cylindrique (6b) et la première étanchéité de siège (12) est reçue de façon étanche dans la première surface d'appui (6b) dans la position de fermeture de la soupape à double siège (V_{R}), et
- avec des tiges de soupape (10a, 11a) disposées les unes dans les autres de façon concentrique pour les organes de fermeture (10, 11), lesquelles sont guidées d'un côté à travers le boîtier de soupape (7) et hors de celui-ci,
**caractérisé en ce que**
le système comporte l'une des combinaisons suivantes (i ; ii) des caractéristiques ci-après (a), (b), (c) :
(i) caractéristiques [(a) ou (b)] et (c) ;
(ii) caractéristiques (a) et (b) et (c),
où :
selon la caractéristique (a), l'arbre de distribution à soupapes (B1, B2, ..., Bi, ..., Bn) respectif débouche directement dans le fond de cuve inférieur (T1a, T2a, ..., Tia, ..., Tna) de la cuve (T ; T1, T2, ..., Ti, ..., Tn) respectivement correspondante,
selon la caractéristique (b), l'arbre de distribution à soupapes (B1, B2, ..., Bi, ..., Bn) respectif est relié à l'unité de traitement (P ; P1, P2, ..., Pi, ..., Pn ; P** ; P1**, P2**, ..., Pi**, ..., Pn**) correspondante ou au fond de cuve inférieur (T1a, T2a, ..., Tia, ..., Tna) de la cuve (T* ; T1*, T2*, ..., Ti*, ..., Tn* ; T**, T1**, T2**, ..., Ti**, ..., Tn**) par le biais d'un raccord de tuyauterie (R ; R1, R2, ..., Ri, ..., Rn ; Ux.1 ; U1.1, U2.1, U3.1, ..., Ui.1, ..., Un.1) correspondant, et le raccord de tuyauterie (R ; Ux.1) débouche dans l'extrémité côté cuve ou côté unité de traitement de l'arbre de distribution à soupapes (B1, B2, ..., Bi, ..., Bn), et
selon la caractéristique (c), l'arbre de distribution à soupapes (B1, B2, ..., Bi, ..., Bn) fait partie, avec l'ensemble de l'espace intérieur de la structure creuse (Bla, B2a, ..., Bia, ..., Bna), d'une conduite de circulation (U ; U1, U2, U3, ..., Ui, ..., Un) passant par la cuve (T ; T* ; T**) ou par l'unité de traitement (P ; P**), laquelle est raccordée à la cuve (T ; T* ; T**) ou à l'unité de traitement (P ; P**) par une première section de conduite de circulation (Ux.1) comportant la structure creuse (Bla, B2a, ..., Bia, ..., Bna) comme partie intégrante, et la conduite de circulation (U ; U1, U2, U3, ..., Ui, ..., Un) est renvoyée dans la cuve (T ; T* ; T**) ou dans l'unité de traitement (P ; P**) par le biais d'une troisième section de conduite de circulation (Ux.3) dans laquelle est disposé un dispositif de transport (20).

3. Système selon l'une des revendications précédentes,
**caractérisé en ce que**
l'arbre de distribution à soupapes (B1, B2, ..., Bi, ..., Bn) est conçu avec une double paroi, entièrement ou dans des régions partielles de celui-ci, et **en ce que** l'espace intermédiaire (15c) formant un échangeur de chaleur (15) ou les espaces intermédiaires (15c) formant un échangeur de chaleur (15) est/sont relié(s) respectivement à un raccord d'arrivée et un raccord d'évacuation (15a, 15b) pour un fluide caloporteur (W).

4. Système selon l'une des revendications précédentes,
**caractérisé en ce que**
l'arbre de distribution à soupapes (B1, B2, ..., Bi, ..., Bn) présente un parcours ascendant du bas vers le haut, généralement vertical, et **en ce que** le premier et le deuxième groupe de conduites (2.1, 2.2, ..., 2.i, ..., 2.n ; 3.1, 3.2, ..., 3.i, ..., 3.n) sont disposés respectivement dans un agencement mutuel en rangées, dans des plans parallèles entre eux et à l'axe longitudinal de la structure creuse.

5. Système selon l'une des revendications précédentes,
**caractérisé en ce que**
l'arbre de distribution à soupapes (B1, B2, ..., Bi, ..., Bn) s'étend transversalement, généralement horizontalement, et **en ce que** le premier et le deuxième groupe de conduites (2.1, 2.2, ..., 2.i, ..., 2.n ; 3.1, 3.2, ..., 3.i, ..., 3.n) sont disposés côte à côte respectivement dans des plans parallèles entre eux et passent devant la structure creuse (B1a, B2a, ..., Bia, ..., Bna) sur un côté ou sur les deux côtés de celle-ci et dans des plans coupant l'axe longitudinal (L) de celle-ci.

6. Système selon la revendication 1,
**caractérisé en ce que**
une deuxième section de conduite de circulation (Ux.2) enjambant au moins la structure creuse (B1a, B2a, ..., Bia, ..., Bna) est réalisée comme une conduite de dérivation vers la première section de conduite de circulation (Ux.1) et réunie avec celle-ci des deux côtés.

7. Système selon l'une des revendications 2 à 6,
**caractérisé en ce que**
• le deuxième organe de fermeture (11) en forme de barre creuse présente un alésage de réception cylindrique (11b) du côté intérieur au niveau de sa section d'extrémité recevant la deuxième étanchéité de siège (13), lequel est conçu avec le même diamètre que la première surface d'appui cylindrique (6b),
• et **en ce que** dans la position de fermeture du deuxième organe de fermeture (11), l'alésage de réception (11b) et la première surface d'appui (6b) se confondent mutuellement en affleurement.

8. Système selon l'une des revendications 2 à 7,
**caractérisé en ce que**
le deuxième organe de fermeture (11) dispose d'une butée métallique sur la deuxième surface d'appui (6c) avec une surface de butée côté organe de fermeture (11d), une surface de butée côté surface d'appui (6e) correspondante étant directement adjacente à la première surface d'appui cylindrique (6b).

9. Système selon l'une des revendications précédentes,
**caractérisé en ce que**
quant à la position d'agencement, l'axe longitudinal du boîtier de soupape (7) s'étend horizontalement ou, vu depuis l'ouverture de raccordement (6a), de façon descendante par rapport à l'horizontale jusqu'à un angle, et **en ce qu'**une paroi périphérique intérieure (11c) de la cavité de fuite (14) présente une pente vers l'ouverture de sortie de celle-ci côté gravité.

10. Système selon l'une des revendications précédentes,
**caractérisé en ce que**
la conduite (2.1, 2.2, ..., 2.i, ..., 2.n ; 3.1, 3.2, ..., 3.i, ..., 3.n ; 4) est conçue en continu avec une section transversale de passage présentant une forme circulaire et non bloquée, et passe devant un boîtier de soupape (7) respectif de la soupape (V_{R} ; V_{R} ; V_{S}) étanche au mélange ou devant le boîtier de soupape (7) respectif de la soupape à double siège (V_{R}), tout en étant reliée à celui-ci respectivement en communication fluidique.

11. Système selon l'une des revendications précédentes,
**caractérisé en ce que**
les arbres de distribution à soupapes (B1, B2, ..., Bi, ..., Bn) présentent un agencement en forme de rangées ou de matrice.

12. Système selon l'une des revendications précédentes,
**caractérisé en ce que**
la structure creuse (Bla, B2a, ..., Bia, ..., Bna) se compose respectivement d'un ensemble de sections de structure individuelles (5), lesquelles sont reliées entre elles en communication fluidique dans la direction de l'axe longitudinal (L) de la structure creuse et présentent respectivement au moins une ouverture de raccordement (6a).

13. Système selon l'une des revendications précédentes,
**caractérisé en ce que**
un arbre agitateur (16b) portant au moins un agitateur (16a) d'un dispositif agitateur (16) s'introduit dans l'arbre de distribution à soupapes (B1, B2, ..., Bi, ..., Bn) dans l'axe longitudinal (L) de celui-ci.

14. Système selon la revendication 13,
**caractérisé en ce que**
l'arbre agitateur (16b) est entraîné soit par le haut par le biais d'un premier entraînement (A) soit par le bas par le biais d'un deuxième entraînement (A*).

15. Système selon la revendication 13,
**caractérisé en ce que**
l'au moins un agitateur (16a) est disposé dans la section de l'arbre de distribution à soupapes (B1, B2, ..., Bi, ..., Bn) délimitée par la région partielle de l'échangeur de chaleur (15).
